(19) Europäisches Patentamt / European Patent Office / Office européen des brevets

(11) **EP 4 678 454 A1**

(12) **EUROPEAN PATENT APPLICATION**
published in accordance with Art. 153(4) EPC


(43) Date of publication:
**14.01.2026 Bulletin 2026/03**

(21) Application number: **23926392.4**

(22) Date of filing: **12.10.2023**

(51) International Patent Classification (IPC):
***B60L 3/00*** *(2019.01)* ***B60L 7/12*** *(2006.01)*
***G01M 17/08*** *(2006.01)*

(52) Cooperative Patent Classification (CPC):
**B60L 3/00; B60L 7/12; G01M 17/08**

(86) International application number:
**PCT/JP2023/037084**

(87) International publication number:
**WO 2024/185184 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.03.2023 JP 2023034452**



(71) Applicant: **Hitachi, Ltd.**
**Tokyo 100-8280 (JP)**

(72) Inventors:
- **MIYAUCHI, Tsutomu**
  **Tokyo 100-8280 (JP)**
- **KUDO, Takumi**
  **Tokyo 100-8280 (JP)**
- **KITAI, Sasuga**
  **Tokyo 100-8280 (JP)**
- **KOIKE, Jun**
  **Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**


(54) **SOUNDNESS DETERMINATION SYSTEM AND SOUNDNESS DETERMINATION METHOD FOR REGENERATIVE BRAKING**


(57) In order to only use information about an own train to determine soundness by taking into consideration restricted regeneration due to an elevated voltage, restriction of regenerative braking force due to slipping/-sliding, a transient response immediately after a brake command occurred, and the like, this system for determining the soundness of regenerative braking in a train being targeted is provided with: a soundness-determination implementation assessment unit for assessing whether to implement determination of soundness of regenerative braking of the train from information on an operation command, train speed, slipping/sliding, motor current, catenary current, and/or occupancy rate of the train, and outputting a determination feasibility signal; and a soundness assessment unit for calculating a regenerative braking force reference value on the basis of a regenerative braking characteristic of the train from the operation command, train speed, and occupancy rate, estimating an amount of regenerative braking restriction from the regenerative braking force reference value and a voltage of the train, and assessing whether regenerative braking is abnormal on the basis of the regenerative braking force reference value, the amount of regenerative braking restriction, a regenerative braking force of the train, and the determination feasibility signal.


FIG. 1

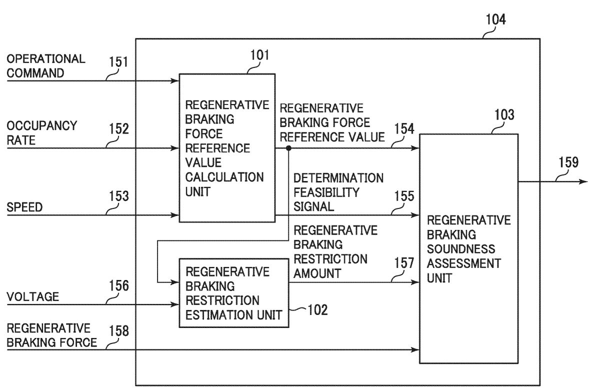


EP 4 678 454 A1

## Description

### Technical Field

The present invention relates to a system and method for determining the soundness of regenerative braking for railway vehicles.

### Background Art

From the perspective of improving the efficiency and labor savings of maintenance work on railway vehicles, there is a demand for the development of technology to predict failures and diagnose abnormalities using data obtained from on-board equipment. In particular, the development of this diagnostic method is important because it is difficult to inspect regenerative braking of a railway vehicle while the vehicle is stopped, since no braking force is generated at zero speed. As one such method, a system has been disclosed that uses data from vehicles traveling on the same route, including the host vehicle, to determine abnormalities in regenerative braking.

### Citation List

### Patent Literature

Patent Literature 1: Japanese Unexamined Patent Application Publication No. 2017-147786

### Summary of Invention

### Technical Problem

The method described in Patent Literature 1 estimates the amount of restriction of regenerative braking in the vehicle on the basis of information (voltage, current, position, and speed) from other vehicles traveling on the same route, and then determines whether there is an abnormality in the regenerative braking by checking if the sum of the estimated restriction amount and the actual regenerative braking force, minus the regenerative braking force that should be output, falls within a predetermined range.

However, in cases where vehicles other than the host vehicle are also using regenerative braking, it is difficult to accurately estimate the amount of restriction because of the influence of the other regenerative vehicles. As a result, there is a risk of erroneous determination in determining abnormalities. Also, in cases where slipping/sliding occurs, there is risk of not being able to make a correct determination because the regenerative braking force is fluctuating.

Accordingly, in order to determine the soundness of regenerative braking force, the purpose of the present invention is to provide a technology that uses only information from the own train to determine the restriction of regenerative braking force due to voltage rise, the restriction of regenerative braking force due to slipping/sliding, the transient response immediately after a brake command is issued, and the like, and then determines the soundness by taking these into consideration.

### Solution to Problem

In order to address the above problems, one representative system for determining the soundness of regenerative braking according to the present invention includes: a soundness-determination implementation assessment unit that assesses whether or not to determine the soundness of regenerative braking for a target train from at least one piece of information related to the train, including operational command, train speed, wheel slip/slide, motor current, catenary current, and occupancy rate, and outputs a determination feasibility signal; and a soundness assessment unit that calculates a regenerative braking force reference value on the basis of regenerative braking characteristics of the train from the operational command, the train speed, and the occupancy rate, estimates a regenerative braking restriction amount from the regenerative braking force reference value and a voltage of the train, and assesses the presence or absence of an abnormality in regenerative braking on the basis of the regenerative braking force reference value, the regenerative braking restriction amount, a regenerative braking force of the train, and the determination feasibility signal.

### Advantageous Effects of Invention

According to the present invention, it is possible to determine the soundness of regenerative braking force by using only the data while the own train is traveling. It is also possible to make determinations that take into account slipping/sliding and fluctuations in brake commands, enabling highly accurate determination of the soundness of regenerative braking force.

Problems, configurations and effects other than those described above will be clarified by the following Description of Embodiments.

Brief Description of Drawings

[Fig. 1] Fig. 1 illustrates the configuration of a regenerative brake device soundness determination system according to a first embodiment of the present invention.

[Fig. 2] Fig. 2 illustrates the configuration of a regenerative braking force reference value calculation unit according to the first embodiment.

[Fig. 3] Fig. 3 illustrates an example of a flowchart of soundness-determination implementation assessment processing according to the first embodiment.

[Fig. 4] Fig. 4 illustrates an example of the restriction characteristics of regenerative braking force.

[Fig. 5] Fig. 5 illustrates an example of a flowchart of regenerative braking force soundness assessment processing according to the first embodiment.

[Fig. 6] Fig. 6 illustrates the horizontal axis as the date and time and the vertical axis as the degree of abnormality of regenerative braking force.

[Fig. 7] Fig. 7 illustrates the configuration of a regenerative brake device soundness determination system according to a second embodiment of the present invention.

[Fig. 8] Fig. 8 illustrates the configuration of a regenerative braking force reference value calculation unit according to the second embodiment.

[Fig. 9] Fig. 9 illustrates an example of a flowchart of soundness-determination implementation assessment processing according to the second embodiment.

[Fig. 10] Fig. 10 illustrates the configuration of a regenerative brake device soundness determination system according to a third embodiment of the present invention.

[Fig. 11] Fig. 11 illustrates the configuration of a regenerative braking force reference value calculation unit according to the third embodiment.

[Fig. 12] Fig. 12 illustrates an example of a flowchart of soundness-determination implementation assessment processing according to the third embodiment.

[Fig. 13] Fig. 13 illustrates the configuration of a regenerative brake device soundness determination system according to a fourth embodiment of the present invention.

[Fig. 14] Fig. 14 illustrates the configuration of a regenerative braking force reference value calculation unit according to the fourth embodiment.

[Fig. 15] Fig. 15 illustrates an example of a graph of motor current characteristics used in soundness-determination implementation assessment according to the fourth embodiment.

[Fig. 16] Fig. 16 illustrates the configuration of a regenerative brake device soundness determination system according to a fifth embodiment of the present invention.

[Fig. 17] Fig. 17 illustrates the configuration of a regenerative braking force reference value calculation unit according to the fifth embodiment.

[Fig. 18] Fig. 18 illustrates an example of a flowchart of soundness-determination implementation assessment processing according to the fifth embodiment.

[Fig. 19] Fig. 19 illustrates the configuration of a regenerative brake device soundness determination system according to a sixth embodiment of the present invention.

[Fig. 20] Fig. 20 illustrates the configuration of a regenerative braking force reference value calculation unit according to the sixth embodiment.

[Fig. 21] Fig. 21 illustrates an example of a flowchart of soundness-determination implementation assessment processing according to the sixth embodiment.

[Fig. 22] Fig. 22 illustrates the configuration of a regenerative brake device soundness determination system according to a seventh embodiment of the present invention.

[Fig. 23] Fig. 23 illustrates the configuration of a regenerative braking soundness assessment unit according to the seventh embodiment.

[Fig. 24] Fig. 24 illustrates a cluster space obtained from the processing results of a clustering processing unit according to the seventh embodiment.

[Fig. 25] Fig. 25 illustrates normal/abnormal states of soundness determination using the cluster space.

Description of Embodiments

Hereinafter, as Description of Embodiments, first to seventh embodiments will be described with reference to the drawings. Note that the present invention is not limited to these embodiments. In addition, in the description of the drawings, the same components are denoted by the same reference numerals.

First Embodiment

Fig. 1 illustrates the configuration of a regenerative brake device soundness determination system 104 according to a first embodiment of the present invention.
The regenerative brake device soundness determination system 104 is composed of a regenerative braking force reference value calculation unit 101, a regenerative braking restriction estimation unit 102, and a regenerative braking soundness assessment unit 103.
The regenerative braking force reference value calculation unit 101 receives as input an operational command 151 that commands the moment-to-moment operations of a train, such as powering, coasting, and braking, an occupancy rate 152 of the train, and a speed 153 of the train, and calculates a regenerative braking force reference value 154 obtained when the train brakes on the basis of regenerative braking characteristics (not illustrated), and a determination feasibility signal 155 that indicates whether or not to determine the soundness of regenerative braking.
The regenerative braking restriction estimation unit 102 receives as input the regenerative braking force reference value 154 and a voltage 156 of the train and estimates a regenerative braking restriction amount 157. Here, the voltage of the train is represented by the DC link voltage within the train input from a catenary.
The regenerative braking soundness assessment unit 103 receives as input a regenerative braking force 158 of the train, the regenerative braking force reference value 154, the determination feasibility signal 155, and the regenerative braking restriction amount 157, determines the presence or absence of an abnormality in the regenerative braking (whether the regenerative braking is normal or abnormal), and outputs a regenerative braking abnormality presence/absence signal 159.
Fig. 2 illustrates the configuration of the regenerative braking force reference value calculation unit 101 according to the first embodiment.
The regenerative braking force reference value calculation unit 101 is composed of: a train characteristics table 201 that stores at least a regenerative braking characteristic 251 of the train; a reference regenerative braking force calculation unit 202 that receives as input the regenerative braking characteristic 251 of the train, the operational command 151, the occupancy rate 152 and the speed 153 and calculates the regenerative braking force reference value 154 that should be output as the train; and a soundness-determination implementation assessment unit 203 that assesses the determination feasibility signal 155, which indicates whether or not to implement the soundness determination based on the operational command 151.
Here, the regenerative braking characteristic 251 included in the train characteristics table 201 will be described.
The regenerative braking characteristic 251 is set so that the regenerative braking force is uniquely defined on the basis of the operational command, the speed, and the occupancy rate. For example, if the operational command is B1, the speed is 50 km/h, and the occupancy rate is 50%, the regenerative braking force is set to 10 [kN/MM], and if the operational command is B3, the speed is 40 km/h, and the occupancy rate is 40%, the regenerative braking force is set to 15 [kN/MM].
Next, a method of calculating the regenerative braking force reference value 154 calculated by the reference regenerative braking force calculation unit 202 will be described.
If the regenerative braking characteristic 251 defined for the operational command 151, the occupancy rate 152, and the speed 153 is in the train characteristics table 201, it is used as is.
However, if the defined regenerative braking characteristic 251 is not in the train characteristics table 201, data X1, X2, X3, and X4 shown in (1) to (4) below are extracted from the regenerative braking characteristic 251 defined by the same operational command as the operational command 151, and the regenerative braking force reference value 154 is calculated by performing linear interpolation on the occupancy rate 152 and the speed 153.

(1) Regenerative braking force X1 defined by the highest occupancy rate P1 among those lower than the occupancy rate 152 and the highest speed S1 among those lower than the speed 153
(2) Regenerative braking force X2 defined by the highest occupancy rate P1 among those lower than the occupancy rate 152 and the lowest speed S2 among those higher than the speed 153
(3) Regenerative brake force X3 defined by the lowest occupancy rate P2 among those higher than the occupancy rate 152 and the highest speed S1 among those lower than the speed 153
(4) Regenerative brake force X4 defined by the lowest occupancy rate P2 among those higher than the occupancy rate 152 and the lowest speed S2 among those higher than the speed 153

Here, the linear interpolation method is a commonly used method, and therefore a description thereof will be omitted.

Furthermore, the regenerative braking characteristic 251 may be set so that the regenerative braking force is uniquely defined on the basis of the above-mentioned operational command, speed, and occupancy rate plus the catenary voltage, these four parameters. In that case, for example, if the catenary voltage is 1650V, the operational command is B1, the speed is 50 km/h, and the occupancy rate is 50%, it is sufficient if the regenerative braking force is set to 10 [kN/MM]. In that case, the calculation can be performed by adding the voltage 156 as an input to each of the regenerative braking force reference value calculation unit 101 illustrated in Fig. 1 and the reference regenerative braking force calculation unit 202 illustrated in Fig. 2, and setting the reference regenerative braking force calculation unit 202 as follows.

If the regenerative braking characteristic 251 defined for the operational command 151, occupancy rate 152, speed 153, and voltage 156 is in the train characteristics table 201, it is used as is.

However, if the defined regenerative braking characteristic 251 is not in the train characteristics table 201, data Y1, Y2, Y3, Y4, Y5, Y6, Y7, and Y8 shown in (1) to (8) below are extracted from the regenerative braking characteristic 251 defined by the same operational command as the operational command 151, and the regenerative braking force reference value 154 is calculated by performing linear interpolation on the occupancy rate 152, the speed 153 and the voltage 156.

(1) Regenerative braking force Y1 defined by the highest occupancy rate P1 among those lower than the occupancy rate 152, the highest speed S1 among those lower than the speed 153, and the highest voltage V1 among those lower than the voltage 156
(2) Regenerative braking force Y2 defined by the highest occupancy rate P1 among those lower than the occupancy rate 152, the lowest speed S2 among those higher than the speed 153, and the highest voltage V1 among those lower than the voltage 156
(3) Regenerative braking force Y3 defined by the lowest occupancy rate P2 among those higher than the occupancy rate 152, the highest speed S1 among those lower than the speed 153, and the highest voltage V1 among those lower than the voltage 156
(4) Regenerative brake force Y4 defined by the lowest occupancy rate P2 among those higher than the occupancy rate 152, the lowest speed S2 among those higher than the speed 153, and the highest voltage V1 among those lower than the voltage 156
(5) Regenerative braking force Y5 defined by the highest occupancy rate P1 among those lower than the occupancy rate 152, the highest speed S1 among those lower than the speed 153, and the lowest voltage V2 among those higher than the voltage 156
(6) Regenerative braking force Y6 defined by the highest occupancy rate P1 among those lower than the occupancy rate 152, the lowest speed S2 among those higher than the speed 153, and the lowest voltage V2 among those higher than the voltage 156
(7) Regenerative braking force Y7 defined by the lowest occupancy rate P2 among those higher than the occupancy rate 152, the highest speed S1 among those lower than the speed 153, and the lowest voltage V2 among those higher than the voltage 156
(8) Regenerative brake force Y8 defined by the lowest occupancy rate P2 among those higher than the occupancy rate 152, the lowest speed S2 among those higher than the speed 153, and the lowest voltage V2 among those higher than the voltage 156

Here, the linear interpolation method is a commonly used method, and therefore a description thereof will be omitted.

Next, the soundness-determination implementation assessment unit 203 will be described with reference to Fig. 3.

Fig. 3 illustrates an example of a flowchart of soundness-determination implementation assessment processing. The entity executing this flowchart is the soundness-determination implementation assessment unit 203, but the description of this entity will be omitted below.

In step S301, it is checked whether this assessment processing has not been performed by the relevant date and time. If the processing has not been performed (Yes), the processing proceeds to step S302. If the processing has been performed (No), the processing proceeds to step S303.

In step S302, the operational command sameness assessment count is reset to 0, and the processing proceeds to step S303.

In step S303, it is determined whether or not the operational command 151 is the same as the previous operational command and is a brake command. If it is the same and is a brake command (Yes), the processing proceeds to step S304. If it is not (No), the processing proceeds to step S305.

In step S304, the operational command sameness assessment count is incremented by 1, and the processing proceeds to step S306.

In step S305, the operational command sameness assessment count is reset to 0, and the processing proceeds to step S306.

In step S306, it is determined whether or not the operational command sameness assessment count is equal to or greater than a predetermined value. If it is equal to or greater than the predetermined value (Yes), the processing proceeds to step S307. If it is less than the predetermined value (No), the processing proceeds to step S308. Here, the predetermined value can be optionally determined. For example, the predetermined value may be determined on the basis of the time it takes for the output to stabilize after a brake command is issued.

In step S307, the determination feasibility signal 155 for soundness determination is set to "possible," and the processing flow then comes to an end.

In step S308, the determination feasibility signal 155 for soundness determination is set to "not possible," and the processing flow then comes to an end.

Next, the processing of the regenerative braking restriction estimation unit 102 will be described with reference to Fig. 4.

Fig. 4 illustrates an example of the restriction characteristics of regenerative braking force. The horizontal axis represents voltage and the vertical axis represents current.

Regenerative braking force has the characteristic of restricting the current when the voltage exceeds a certain value V0. In the example illustrated in Fig. 4, regenerative braking force up to a current Imax can be obtained until the voltage is V0 or lower, but when the voltage rises above V0, the current is restricted, and when the voltage reaches Vmax, the current becomes zero. Therefore, the upper limit current of regenerative braking is determined by the voltage, and a maximum regenerative braking force P, including the restriction, is determined by the upper limit current, the voltage at that time, and the efficiency $\mu$ of the equipment.

The restriction amount of regenerative braking is calculated by a value W obtained by subtracting the maximum regenerative braking force P from the regenerative braking force that can be obtained by design. If W>0, W is the restriction amount. If W<0, the regenerative braking force that can be obtained by design can be output, so that the restriction amount W is 0. The restriction amount W obtained in this manner is output as the regenerative braking restriction amount 157.

Next, the processing of the regenerative braking soundness assessment unit 103 will be described with reference to Fig. 5.

Fig. 5 illustrates an example of a flowchart of regenerative braking force soundness assessment processing. The entity executing this flowchart is the regenerative braking soundness assessment unit 103, but the description of this entity will be omitted below.

In step S501, it is checked whether the determination feasibility signal 155 for soundness determination indicates "possible" or "not possible." If it indicates "possible" (Yes), the processing proceeds to step S502. Meanwhile, if it indicates "not possible" (No), the processing is terminated.

In step S502, an estimated regenerative braking force Pn is calculated from the difference between the regenerative braking force reference value 154 and the regenerative braking restriction amount 157, and the processing proceeds to step S503.

In step S503, it is determined whether or not the absolute value of the difference between the estimated regenerative braking force Pn and the moment-to-moment regenerative braking force 158 of the train is equal to or less than a reference assessment value. If it is equal to or less than the reference assessment value (Yes), the processing proceeds to step S504. If it exceeds the reference assessment value (No), the processing proceeds to step S505. Here, the reference assessment value is generally 0, but is set to a minute value in consideration of sensing errors and the like.

In step S504, the assessment result is classified as normal, and the processing flow then comes to an end.

In step S505, the assessment result is classified as abnormal, and the processing flow then comes to an end.

Here, even when the result of the assessment is abnormal as a result of this processing flow, a countermeasure against erroneous detection may be applied, such that an abnormality is detected if assessments classified as abnormal are repeated multiple times, rather than being output immediately. In this case, for example, if the difference from the reference assessment value becomes equal to or greater than a certain value in step S503, a method of classifying the assessment as abnormal, assuming an increased likelihood of an abnormality, may also be used.

Alternatively, a method of providing an index of soundness on the basis of normal/abnormal results can also be considered. For example, the "degree of abnormality," calculated by dividing the number of assessments classified as abnormal by the total number of assessments, is displayed at regular intervals, such as daily or monthly. This makes it possible to extract regenerative braking devices that appear to be abnormal, and to indicate which devices should be prioritized and inspected closely when maintenance personnel are working.

Fig. 6 illustrates the horizontal axis as the date and time and the vertical axis as the degree of abnormality of regenerative braking force. This makes it possible to detect signs of abnormality. In addition, a threshold value for assessing a true abnormality may be established, and if the abnormality ratio exceeds the threshold value for determining a true abnormality, the assessment may be classified as abnormal.

By using the above-described processing flow, it is possible to assess the soundness of the regenerative braking force.

Note that in the configuration according to the first embodiment, as illustrated in Figs. 1 and 2, the soundness-determination implementation assessment unit 203 is included in the regenerative braking force reference value calculation unit 101, but it does not necessarily need to be included in the regenerative braking force reference value calculation unit 101, and may be configured to be independent.

Alternatively, the configuration may be such that the soundness-determination implementation assessment unit 203 is included in the regenerative braking restriction estimation unit 102. In this case, however, the regenerative braking restriction estimation unit 102 needs to receive the operational command 151 as input.

Second Embodiment

Fig. 7 illustrates the configuration of a regenerative brake device soundness determination system according to a second embodiment of the present invention.

A regenerative brake device soundness determination system 702 according to the second embodiment is obtained by replacing the regenerative braking force reference value calculation unit 101 according to the first embodiment illustrated in Fig. 1 with a regenerative braking force reference value calculation unit 701.

Fig. 8 illustrates the configuration of the regenerative braking force reference value calculation unit 701.

The regenerative braking force reference value calculation unit 701 is composed of: the reference regenerative braking force calculation unit 202 that calculates the regenerative braking force reference value 154 that should be output as the train, on the basis of the regenerative braking characteristic 251 from the train characteristics table 201 that stores the regenerative braking characteristic 251 of the train, the operational command 151, the occupancy rate 152, and the speed 153; and a soundness-determination implementation assessment unit 801 that assesses the determination feasibility signal 155 for soundness determination on the basis of the speed 153.

Next, the soundness-determination implementation assessment unit 801 will be described with reference to Fig. 9.

Fig. 9 illustrates an example of a flowchart of soundness determination implementation assessment processing according to the second embodiment. The entity executing this flowchart is the soundness-determination implementation assessment unit 203, but the description of this entity will be omitted below.

In step S901, it is determined whether or not the speed 153 is equal to or greater than a threshold speed. If it is equal to or greater than the threshold speed (Yes), the processing proceeds to step S902, and if it is less than the threshold speed (No), the processing proceeds to step S903.

In step S902, the determination feasibility signal 155 for soundness determination is set to "possible," and the processing flow then comes to an end.

In step S903, the determination feasibility signal 155 for soundness determination is set to "not possible," and the processing flow then comes to an end.

Here, it is advisable to use as the threshold speed a speed at which regenerative braking can be detected. The reason for this is that at a speed at which regenerative braking cannot be detected, even if regenerative braking occurs, it is not possible to determine its validity.

After executing the above-mentioned processing flow, the processing illustrated in Fig. 4 and subsequent figures, which has been described in the first embodiment above, is performed, thereby making it possible to assess the soundness of regenerative braking force.

Note that in the configuration according to the second embodiment, as illustrated in Figs. 7 and 8, the soundness-determination implementation assessment unit 801 is included in the regenerative braking force reference value calculation unit 701, but it does not necessarily need to be included in the regenerative braking force reference value calculation unit 701, and may be configured to be independent.

Alternatively, the configuration may be such that the soundness-determination implementation assessment unit 801 is included in the regenerative braking restriction estimation unit 102. In this case, however, the regenerative braking restriction estimation unit 102 needs to receive the speed 153 as input.

Third Embodiment

Fig. 10 illustrates the configuration of a regenerative brake device soundness determination system according to a third embodiment of the present invention.

In the third embodiment, compared to the first embodiment illustrated in Fig. 1, wheel slip/slide information 1051 is added as an input, the regenerative braking force reference value calculation unit 101 according to the first embodiment is changed to a regenerative braking force reference value calculation unit 1001, and the regenerative brake device soundness determination system 104 according to the first embodiment is changed to a regenerative brake device soundness determination system 1002.

The regenerative braking force reference value calculation unit 1001 calculates the regenerative braking force reference value 154 obtained when the train brakes, and the determination feasibility signal 155 indicating whether or not to determine the soundness of regenerative braking, on the basis of the regenerative braking characteristics (not illustrated), from the wheel slip/slide information 1051, the operational command 151 that commands the moment-to-moment operations of the train, such as powering, coasting, and braking, the occupancy rate 152 of the train, and the speed 153 of the train.

The functions of the regenerative braking restriction estimation unit 102 and the regenerative braking soundness assessment unit 103 are the same as those in the first embodiment.

Fig. 11 illustrates the configuration of the regenerative braking force reference value calculation unit 1001.

The regenerative braking force reference value calculation unit 1001 is composed of: the reference regenerative braking force calculation unit 202 that calculates the regenerative braking force reference value 154 that should be output as the train, on the basis of the regenerative braking characteristic 251 from the train characteristics table 201 that stores the regenerative braking characteristic 251 of the train, the operational command 151, the occupancy rate 152, and the speed 153; and a soundness-determination implementation assessment unit 1101 that assesses the determination feasibility signal 155 for soundness determination on the basis of the wheel slip/slide information 1051.

Next, the soundness-determination implementation assessment unit 1101 will be described with reference to Fig. 12.

Fig. 12 illustrates an example of a flowchart of soundness-determination implementation assessment processing according to the third embodiment. The entity executing this flowchart is the soundness-determination implementation assessment unit 1101, but the description of this entity will be omitted below.

In step S1201, it is determined whether or not the wheel slip/slide information 1051 indicates slip/slide. If it indicates slip/slide (Yes), the processing proceeds to step S1202, and if it does not indicate slip/slide (No), the processing proceeds to step S1203.

In step S1202, the determination feasibility signal 155 for soundness determination is set to "not possible," and the processing flow then comes to an end.

In step S1203, the determination feasibility signal 155 for soundness determination is set to "possible," and the processing flow then comes to an end.

After executing the above-mentioned processing flow, the processing illustrated in Fig. 4 and subsequent figures, which has been described in the first embodiment above, is performed, thereby making it possible to assess the soundness of regenerative braking force.

Note that in the configuration according to the third embodiment, as illustrated in Figs. 10 and 11, the soundness-determination implementation assessment unit 1101 is included in the regenerative braking force reference value calculation unit 1001, but it does not necessarily need to be included in the regenerative braking force reference value calculation unit 1001, and may be configured to be independent.

Alternatively, the configuration may be such that the soundness-determination implementation assessment unit 1101 is included in the regenerative braking restriction estimation unit 102. In this case, however, the regenerative braking restriction estimation unit 102 needs to receive the wheel slip/slide information 1051 as input.

## Fourth Embodiment

A fourth embodiment is a modification of the third embodiment described above.

Fig. 13 illustrates the configuration of a regenerative brake device soundness determination system according to the fourth embodiment of the present invention.

In the fourth embodiment, a motor current 1351 is added as an input in place of the wheel slip/slide information 1051 according to the third embodiment illustrated in Fig. 10, the regenerative braking force reference value calculation unit 1001 according to the third embodiment is changed to a regenerative braking force reference value calculation unit 1301, and the regenerative brake device soundness determination system 1002 is changed to a regenerative brake device soundness determination system 1302.

The regenerative braking force reference value calculation unit 1301 calculates the regenerative braking force reference value 154 obtained when the train brakes, and the determination feasibility signal 155 indicating whether or not to determine the soundness of regenerative braking, on the basis of the regenerative braking characteristics (not illustrated), from the motor current 1351, the operational command 151 that commands the moment-to-moment operations of the train, such as powering, coasting, and braking, the occupancy rate 152 of the train, and the speed 153 of the train.

The functions of the regenerative braking restriction estimation unit 102 and the regenerative braking soundness assessment unit 103 are the same as those in the third embodiment.

Fig. 14 illustrates the configuration of the regenerative braking force reference value calculation unit 1301.

The regenerative braking force reference value calculation unit 1301 is composed of: the reference regenerative braking force calculation unit 202 that calculates the regenerative braking force reference value 154 that should be output as the train, on the basis of the regenerative braking characteristic 251 from a train characteristics table 1401 that stores at least the regenerative braking characteristic 251 and motor current characteristic 1451 of the train, the operational command 151, the occupancy rate 152, and the speed 153; a reference motor current calculation unit 1402 that calculates a motor current reference value 1452 that should be output as the train, on the basis of the motor current characteristic 1451 from the train characteristics table 1401, the operational command 151, the occupancy rate 152 and the speed 153; and a soundness-determination implementation assessment unit 1403 that assesses the determination feasibility signal 155 for soundness determination on the basis of the motor current reference value 1452 and the motor current 1351.

The motor current characteristic 1451 of the train is set so that the regenerative braking force is uniquely defined on the basis of the operational command, speed, and occupancy rate. For example, if the operational command is B1, the speed is 50 km/h, and the occupancy rate is 50%, the motor current is set to 150 [A/MM], and if the operational command is B3, the speed is 40 km/h, and the occupancy rate is 40%, the motor current is set to 188 [A/MM].

A method of calculating the motor current reference value 1452 calculated by the reference motor current calculation unit 1402 will be described.

If the motor current characteristic 1451 defined for the operational command 151, the occupancy rate 152, and the speed 153 is in the train characteristics table 1401, it is used as is.

However, if the defined motor current characteristic 1451 is not in the train characteristics table 1401, data A1, A2, A3, and A4 shown in (1) to (4) below are extracted from the motor current characteristic 1451 defined by the same operational command as the operational command 151, and the motor current reference value 1452 is calculated by performing linear interpolation on the occupancy rate 152 and the speed 153.

(1) Motor current A1 defined by the highest occupancy rate P1 among those lower than the occupancy rate 152 and the highest speed S1 among those lower than the speed 153
(2) Motor current A2 defined by the highest occupancy rate P1 among those lower than the occupancy rate 152 and the lowest speed S2 among those higher than the speed 153
(3) Motor current A3 defined by the lowest occupancy rate P2 among those higher than the occupancy rate 152 and the highest speed S1 among those lower than the speed 153
(4) Motor current A4 defined by the lowest occupancy rate P2 among those higher than the occupancy rate 152 and the lowest speed S2 among those higher than the speed 153

Here, the linear interpolation method is a commonly used method, and therefore a description thereof will be omitted.

The motor current characteristic 1451 may also be set so that the motor current is uniquely defined on the basis of the catenary voltage, operational command, speed, and occupancy rate. In that case, for example, if the catenary voltage is 1650V, the operational command is B1, the speed is 50 km/h, and the occupancy rate is 50%, it is sufficient if the motor current is set to 160 [A/MM].

Furthermore, by adding the voltage 156 as an input to each of the regenerative braking force reference value calculation unit 1301 illustrated in Fig. 13 and the reference motor current calculation unit 1402 illustrated in Fig. 14, and setting the reference motor current calculation unit 1402 as follows, it is possible to calculate the motor current.

If the motor current characteristic 1451 defined for the operational command 151, the occupancy rate 152, the speed 153, and the voltage 156 is in the train characteristics table 1401, it is used as is.

However, if the defined motor current characteristic 1451 is not in the train characteristics table 1401, data C1, C2, C3, C4, C5, C6, C7, and C8 shown in (1) to (8) below are extracted from the motor current characteristic 1451 defined by the same operational command as the operational command 151, and the motor current reference value 1452 is calculated by performing linear interpolation on the occupancy rate 152, the speed 153, and the voltage 156.

(1) Motor current C1 defined by the highest occupancy rate P1 among those lower than the occupancy rate 152, the highest speed S1 among those lower than the speed 153, and the highest voltage V1 among those lower than the voltage 156
(2) Motor current C2 defined by the highest occupancy rate P1 among those lower than the occupancy rate 152, the lowest speed S2 among those higher than the speed 153, and the highest voltage V1 among those lower than the voltage 156
(3) Motor current C3 defined by the lowest occupancy rate P2 among those higher than the occupancy rate 152, the highest speed S1 among those lower than the speed 153, and the highest voltage V1 among those lower than the voltage 156
(4) Motor current C4 defined by the lowest occupancy rate P2 among those higher than the occupancy rate 152, the lowest speed S2 among those higher than the speed 153, and the highest voltage V1 among those lower than the voltage 156

(5) Motor current C5 defined by the highest occupancy rate P1 among those lower than the occupancy rate 152, the highest speed S1 among those lower than the speed 153, and the lowest voltage V2 among those higher than the voltage 156

(6) Motor current C6 defined by the highest occupancy rate P1 among those lower than the occupancy rate 152, the lowest speed S2 among those higher than the speed 153, and the lowest voltage V2 among those higher than the voltage 156

(7) Motor current C7 defined by the lowest occupancy rate P2 among those higher than the occupancy rate 152, the highest speed S1 among those lower than the speed 153, and the lowest voltage V2 among those higher than the voltage 156

(8) A motor current C8 defined by the lowest occupancy rate P2 among those higher than the occupancy rate 152, the lowest speed S2 among those higher than the speed 153, and the lowest voltage V2 among those higher than the voltage 156

Here, the linear interpolation method is a commonly used method, and therefore a description thereof will be omitted.

Next, the soundness-determination implementation assessment unit 1403 will be described with reference to Fig. 15.

Fig. 15 illustrates an example of a graph of motor current characteristics used in the soundness-determination implementation assessment. In this graph, the horizontal axis represents elapsed time, the vertical axis represents motor current, and the graph shows the motor current reference value 1452 and the moment-to-moment motor current 1351.

For example, if a phenomenon occurs in which the moment-to-moment motor current 1351 deviates from the motor current reference value 1452 (specifically, as illustrated in Fig. 15, a case where the moment-to-moment motor current 1351 falls below the motor current reference value 1452 and then rises again to return to the motor current reference value 1452), it is determined that slipping/sliding has occurred, and the determination feasibility signal 155 for soundness determination is set to "not possible." As long as this case does not occur, the determination feasibility signal 155 for soundness determination is set to "possible."

By using the value obtained by the above-mentioned determination processing and performing the processing illustrated in Fig. 4 and subsequent figures described in the first embodiment above, it is possible to assess the soundness of the regenerative braking force.

Note that in the configuration according to the fourth embodiment, as illustrated in Fig. 14, the reference motor current calculation unit 1402 and the soundness-determination implementation assessment unit 1403 are included in the regenerative braking force reference value calculation unit 1301, but these units do not necessarily need to be included in the regenerative braking force reference value calculation unit 1301, and may be configured to be independent.

Alternatively, the configuration may be such that the soundness-determination implementation assessment unit 1403 is included in the regenerative braking restriction estimation unit 102. In this case, however, the regenerative braking restriction estimation unit 102 needs to receive the motor current 1351 and the motor current reference value 1452 as input.

## Fifth Embodiment

A fifth embodiment is a modification of the fourth embodiment above.

Fig. 16 illustrates the configuration of a regenerative brake device soundness determination system according to the fifth embodiment of the present invention.

In the fifth embodiment, in place of the motor current 1351 in the fourth embodiment illustrated in Fig. 13, a catenary current 1651 and power (auxiliary power) 1652 supplied to auxiliary equipment for lighting and air conditioning used in trains are added as inputs, the regenerative braking force reference value calculation unit 1301 according to the fourth embodiment is changed to a regenerative braking force reference value calculation unit 1601, and the regenerative brake device soundness determination system 1302 is changed to a regenerative brake device soundness determination system 1602. Furthermore, the voltage 156 is added as an input to the regenerative braking force reference value calculation unit 1601.

The regenerative braking force reference value calculation unit 1601 calculates the regenerative braking force reference value 154 obtained when the train brakes, and the determination feasibility signal 155 indicating whether or not to determine the soundness of regenerative braking, on the basis of vehicle characteristics (not illustrated), from the catenary current 1651, the auxiliary power 1652, the operational command 151 that commands the moment-to-moment operations of the train, such as powering, coasting, and braking, the occupancy rate 152 of the train, the speed 153 of the train, and the voltage 156 of the train.

The functions of the regenerative braking restriction estimation unit 102 and the regenerative braking soundness assessment unit 103 are the same as those in the fourth embodiment.

Fig. 17 illustrates the configuration of the regenerative braking force reference value calculation unit 1601.

The regenerative braking force reference value calculation unit 1601 is composed of: a train characteristics table 1701 that stores at least the regenerative braking characteristic 251 and equipment efficiency 1751 of the train; the reference regenerative braking force calculation unit 202 that calculates the regenerative braking force reference value 154 that should be output as the train, on the basis of the regenerative braking characteristic 251 of the train, the operational command 151, the occupancy rate 152, and the speed 153; a reference catenary current calculation unit 1702 that calculates a catenary current reference value 1752 that should be output as the train, on the basis of the equipment efficiency 1751, the speed 153, the regenerative braking force reference value 154, the voltage 156, and the auxiliary power 1652; and a soundness-determination implementation assessment unit 1703 that assesses the determination feasibility signal 155 for soundness determination on the basis of the catenary current reference value 1752 and the catenary current 1651. Note that the direction of the catenary current 1651 is positive in the direction of flow from the vehicle to the catenary.

Here, the equipment efficiency 1751 indicates the efficiency of drive equipment used in the train. This value may be a constant value, may change depending on the speed, or may change depending on the speed and regenerative braking force.

Next, a method of calculating the catenary current reference value 1752 performed by the reference catenary current calculation unit 1702 will be described.

When the equipment efficiency 1751 is $\mu$ [%], the speed 153 is S [km/h], the regenerative braking force reference value 154 is Bef (>0) [kN], the voltage 156 is V [V], and the auxiliary power 1652 is P [kW], the catenary current reference value 1752 can be calculated using the formula shown below.

$$\text{Catenary current reference value 1752 [A]} = (\text{Bef} \times \text{S}/3.6 \times \mu/100 - \text{P}) \times 1000/\text{V}$$

Furthermore, the soundness-determination implementation assessment unit 1703 will be described with reference to Fig. 18.

Fig. 18 illustrates an example of a graph of catenary current characteristics used in the soundness-determination implementation assessment. In this graph, the horizontal axis represents elapsed time, the vertical axis represents catenary current, and the graph shows the catenary current reference value 1752 and the moment-to-moment catenary current 1651.

For example, if a phenomenon occurs in which the moment-to-moment catenary current 1651 deviates from the catenary current reference value 1752 (specifically, a case where the moment-to-moment catenary current 1651 falls below the catenary current reference value 1752 and then rises again to return to the catenary current reference value 1752), it is determined that slipping/sliding has occurred, and the determination feasibility signal 155 for soundness determination is set to "not possible." As long as this case does not occur, the determination feasibility signal 155 for soundness determination is set to "possible."

By using the value obtained by the above-mentioned determination processing and performing the processing illustrated in Fig. 4 and subsequent figures described in the first embodiment above, it is possible to assess the soundness of the regenerative braking force.

Note that in the configuration according to the fifth embodiment, as illustrated in Fig. 17, the reference catenary current calculation unit 1702 and the soundness-determination implementation assessment unit 1703 are included in the regenerative braking force reference value calculation unit 1601, but these units do not necessarily need to be included in the regenerative braking force reference value calculation unit 1601, and may be configured to be independent.

Alternatively, the configuration may be such that the soundness-determination implementation assessment unit 1703 is included in the regenerative braking restriction estimation unit 102. In this case, however, the regenerative braking restriction estimation unit 102 needs to receive the catenary current 1651 and the catenary current reference value 1752 as input.

Sixth Embodiment

Trains can tilt when traveling on gradients or curves. As a result, the air spring pressure that measures the occupancy rate can fluctuate, causing a sudden change in the occupancy rate. A sudden change in the occupancy rate can also have a significant impact on the regenerative braking force.

A sixth embodiment deals with this sudden change in occupancy rate.

Fig. 19 illustrates the configuration of a regenerative brake device soundness determination system according to the sixth embodiment of the present invention.

A regenerative brake device soundness determination system 1902 according to the sixth embodiment is configured by simply replacing the regenerative braking force reference value calculation unit 101 according to the first embodiment illustrated in Fig. 1 with a regenerative braking force reference value calculation unit 1901.

Fig. 20 illustrates the configuration of the regenerative braking force reference value calculation unit 1901.

The regenerative braking force reference value calculation unit 1901 is composed of: the train characteristics table 201 that stores at least the regenerative braking characteristic 251 of the train; the reference regenerative braking force calculation unit 202 that calculates the regenerative braking force reference value 154 that should be output as the train, on the basis of the regenerative braking characteristic 251 of the train, the operational command 151, the occupancy rate 152, and the speed 153; and a soundness-determination implementation assessment unit 2001 that assesses the determination feasibility signal 155 for soundness determination on the basis of the occupancy rate 152.

Next, the soundness-determination implementation assessment unit 2001 will be described with reference to Fig. 21.

Fig. 21 illustrates an example of a flowchart of soundness-determination implementation assessment processing. The entity executing this flowchart is the soundness-determination implementation assessment unit 2001, but the description of this entity will be omitted below.

In step S2101, it is determined whether or not the range of fluctuation in the moment-to-moment occupancy rate 152 is equal to or less than a threshold value. If it is equal to or less than the threshold value (Yes), the processing proceeds to step S2102, and if it exceeds the threshold value (No), the processing proceeds to step S2103.

In step S2102, the determination feasibility signal 155 for soundness determination is set to "possible," and the processing flow then comes to an end.

In step S2103, the determination feasibility signal 155 for soundness determination is set to "not possible," and the processing flow then comes to an end.

Here, the threshold value is preferably determined on the basis of the resolution and sensing error of a monitoring device. Generally, when traveling on a road with no gradients or curves, the amount of sensing error of the monitoring device may fluctuate, but it will not fluctuate beyond that. For this reason, the threshold value is determined taking into account the sensing error.

Note that if the resolution of the monitoring device is greater than the sensing error, then that resolution must be used. For example, if the sensing error is 3% with a resolution of 1%/1 bit, then the threshold is 3 [%]; however, if the sensing error is 3% with a resolution of 5%/bit, then the threshold is 5 [%].

After executing the above-mentioned processing flow, the processing illustrated in Fig. 4 and subsequent figures, which has been described in the first embodiment above, is performed, thereby making it possible to assess the soundness of regenerative braking force.

Note that in the configuration according to the sixth embodiment, as illustrated in Fig. 20, the soundness-determination implementation assessment unit 2001 is included in the regenerative braking force reference value calculation unit 1901, but it does not necessarily need to be included in the regenerative braking force reference value calculation unit 1901, and may be configured to be independent.

Alternatively, the configuration may be such that the soundness-determination implementation assessment unit 2001 is included in the regenerative braking restriction estimation unit 102. In this case, however, the regenerative braking restriction estimation unit 102 needs to receive the occupancy rate 152 as input.

Note that the soundness-determination implementation assessment unit illustrated in each of the first to sixth embodiments described above may be a combination of a plurality of the soundness-determination implementation assessment units.

## Seventh Embodiment

Fig. 22 illustrates the configuration of a regenerative brake device soundness determination system according to a seventh embodiment of the present invention.

A regenerative brake device soundness determination system 2203 according to the seventh embodiment is composed of: a soundness-determination implementation assessment unit 2201 that calculates the determination feasibility signal 155 indicating whether or not to determine the soundness of regenerative braking on the basis of the operational command 151 that commands the moment-to-moment operations of the train, such as powering, coasting, and braking, the occupancy rate 152 of the train, and the speed 153 of the train; and a regenerative braking soundness assessment unit 2202 that determines the presence or absence of an abnormality in the regenerative braking (whether the regenerative braking is normal or abnormal) on the basis of the operational command 151, the occupancy rate 152, the speed 153, the determination feasibility signal 155, the voltage 156, and the regenerative braking force 158 of the train, and outputs the regenerative braking abnormality presence/absence signal 159.

Here, the method illustrated in the first, second, or sixth embodiment can be used for soundness-determination implementation assessment unit 2201, either alone or in combination. The methods illustrated in the third to fifth embodiments may also be used. In this case, the methods illustrated in the third to fifth embodiments can be implemented by adding data required for implementing the methods.

Next, the regenerative braking soundness assessment unit 2202 will be described with reference to Fig. 23.

Fig. 23 illustrates the configuration of the regenerative braking soundness assessment unit 2202.

The regenerative braking soundness assessment unit 2202 is composed of: a clustering processing unit 2301 that performs cluster processing on the basis of the historical data of each of the operational command 151, the occupancy rate 152, the speed 153, the determination feasibility signal 155, the voltage 156, and the regenerative braking force 158 of the train; and a soundness determination processing unit 2302 that determines the presence or absence of an abnormality in the regenerative braking (whether the regenerative braking is normal or abnormal) on the basis of a cluster space 2351 obtained from the processing results of the clustering processing unit 2301, the operational command 151, the occupancy rate 152, the speed 153, the determination feasibility signal 155, the voltage 156, and the regenerative braking force 158 of the train, and outputs the regenerative braking abnormality presence/absence signal 159.

The clustering processing unit 2301 and the cluster space 2351 obtained as a result of the processing will be described with reference to Fig. 24.

Fig. 24 illustrates the cluster space 2351 obtained from the processing results of the clustering processing unit 2301. Here, the clustering processing unit 2301 performs processing if the determination feasibility signal 155 for soundness determination indicates "possible." In Fig. 24, clusters are formed on a five-axis space of the operational command 151, the occupancy rate 152, the speed 153, the voltage 156, and the regenerative braking force 158.

Furthermore, the soundness determination processing unit 2302 will be described with reference to Fig. 25.

Fig. 25 illustrates normal/abnormal states of the soundness determination using the cluster space.

The figure illustrates a state in which the determination feasibility signal 155 for soundness determination indicates "possible" and data (▲ points) defined by the operational command 151, the occupancy rate 152, the speed 153, the voltage 156, and the regenerative braking force 158 are plotted, on the cluster space 2351 obtained from the processing result of the clustering processing unit 2301. At this time, the soundness determination processing unit 2302 determines whether the state is normal or abnormal on the basis of the proximity to existing clusters, or the like. Here, there are various methods for clustering processing, and the contents of the present invention will not be affected regardless of which method is used for determination.

According to the first to seventh embodiments described above, it is possible to determine the soundness of regenerative braking force by using data while the own train is traveling. It is also possible to make determination taking into account slip/slide and fluctuations in the brake command, making it possible to determine the soundness of the regenerative braking force with high accuracy.

Furthermore, according to the above embodiments, at least the following technical matters are included.

<Technical matter 1>

A system for determining soundness of regenerative braking for a target train includes: a soundness-determination implementation assessment unit that assesses whether or not to determine the soundness of regenerative braking for the train from at least one piece of information related to the train, including operational command, train speed, wheel slip/slide, motor current, catenary current, and occupancy rate, and outputs a determination feasibility signal; and a soundness assessment unit that calculates a regenerative braking force reference value on the basis of regenerative braking characteristics of the train from the operational command, the train speed, and the occupancy rate, estimates a regenerative braking restriction amount from the regenerative braking force reference value and a voltage of the train, and assesses presence or absence of an abnormality in regenerative braking on the basis of the regenerative braking force reference value, the regenerative braking restriction amount, a regenerative braking force of the train, and the determination feasibility signal.

<Technical matter 2>

In the system for determining the soundness of regenerative braking according to Technical matter 1 above, the soundness assessment unit compares a difference value between an estimated regenerative braking force, which is a difference between the regenerative braking force reference value and the regenerative braking restriction amount, and the moment-to-moment regenerative braking force of the train, with a reference assessment value to assess the presence or absence of an abnormality in the regenerative braking.

<Technical matter 3>

In the system for determining the soundness of regenerative braking according to Technical matter 1 or 2 above, the soundness-determination implementation assessment unit sets the determination feasibility signal to "possible" if the train operational command indicates braking and does not fluctuate for a predetermined period of time or more.

<Technical matter 4>

In the system for determining the soundness of regenerative braking according to any one of Technical matters 1 to 3 above, the soundness-determination implementation assessment unit sets the determination feasibility signal to "possible" if the train speed is equal to or greater than a predetermined threshold.

<Technical matter 5>

In the system for determining the soundness of regenerative braking according to any one of Technical matters 1 to 4 above, the soundness-determination implementation assessment unit sets the determination feasibility signal to "not possible" in the event of wheel slip/slide in the train.

<Technical matter 6>

In the system for determining the soundness of regenerative braking according to Technical matter 5 above, the soundness-determination implementation assessment unit calculates a motor current reference value of the train from the operational command, the occupancy rate, the train speed, and motor current characteristics of the train, and detects the occurrence of the wheel slip/slide on the basis of a difference value between the motor current reference value and the motor current of the train.

<Technical matter 7>

In the system for determining the soundness of regenerative braking according to Technical matter 5 above, the soundness-determination implementation assessment unit calculates a catenary current reference value for the train from the operational command, the occupancy rate, the train speed, and equipment efficiency of the train, and detects the occurrence of the wheel slip/slide on the basis of a difference value between the catenary current reference value and the catenary current flowing in the train.

<Technical matter 8>

In the system for determining the soundness of regenerative braking according to any one of Technical matters 1 to 7 above, the soundness-determination implementation assessment unit sets the determination feasibility signal to "not possible" if the occupancy rate while the train is traveling exceeds a predetermined threshold.

<Technical matter 9>

A system for determining soundness of regenerative braking for a target train, includes: a soundness-determination implementation assessment unit that assesses whether or not to determine the soundness of regenerative braking force for the train from at least one piece of information related to the train, including operational command, train speed, wheel slip/slide, motor current, catenary current, and occupancy rate, and outputs a determination feasibility signal; and a soundness assessment unit that uses a cluster space obtained by cluster processing based on historical data of each of the operational command, the train speed, the occupancy rate, voltage, the regenerative braking force, of the train, and the determination feasibility signal, to assess presence or absence of an abnormality in regenerative braking.

<Technical matter 10>

In the system for determining the soundness of regenerative braking according to any one of Technical matters 1 to 9 above, the soundness assessment unit detects an abnormality if the regenerative braking is assessed as abnormal multiple times.

<Technical matter 11>

In the system for determining the soundness of regenerative braking according to any one of Technical matters 1 to 10 above further includes a function for displaying and outputting, at regular intervals, a ratio of number of times the regenerative braking is assessed as abnormal to total number of times the regenerative braking is assessed.

<Technical matter 12>

A method for determining soundness of regenerative braking for a target train includes: assessing whether or not to determine the soundness of regenerative braking for the train from at least one piece of information related to the train, including operational command, train speed, wheel slip/slide, motor current, catenary current, and occupancy rate, and outputting a determination feasibility signal; calculating a regenerative braking force reference value on the basis of regenerative braking characteristics of the train from the operational command, the train speed, and the occupancy rate; estimating a regenerative braking restriction amount from the regenerative braking force reference value and a voltage of the train; and assessing presence or absence of an abnormality in regenerative braking on the basis of the regenerative braking force reference value, the regenerative braking restriction amount, a regenerative braking force of the train, and the determination feasibility signal.

<Technical matter 13>

In the method for determining the soundness of regenerative braking according to Technical matter 12, a difference value between an estimated regenerative braking force, which is a difference between the regenerative braking force reference value and the regenerative braking restriction amount, and the moment-to-moment regenerative braking force of the train is compared with a reference assessment value to assess the presence or absence of an abnormality in the regenerative braking.

<Technical matter 14>

In the method for determining the soundness of regenerative braking according to Technical matter 12 or 13, the determination feasibility signal is set to "possible" if the operational command indicates braking and does not fluctuate for a predetermined period of time or more.

<Technical matter 15>

In the method for determining the soundness of regenerative braking according to any one of Technical matters 12 to 14, the determination feasibility signal is set to "not possible" in the event of wheel slip/slide in the train.

Although first to seventh embodiments have been described above as Description of Embodiments, the present invention is not limited to the above-described first to seventh embodiments, and various modifications are possible without departing from the spirit of the present invention.

List of Reference Signs

101,701,1001,1301,1601,1901: regenerative braking force reference value calculation unit,
102: regenerative braking restriction estimation unit,
103, 2202: regenerative braking soundness assessment unit,
104, 702, 1002, 1302, 1602, 1902, 2203: regenerative brake device soundness determination system,
151: operational command,
152: occupancy rate,
153: speed,
154: regenerative braking force reference value,
155: determination feasibility signal,
156: voltage,
157: regenerative braking restriction amount,
158: regenerative braking force,
159: regenerative braking abnormality presence/absence signal,
201, 1401, 1701: train characteristics table,
202: reference regenerative braking force calculation unit,
203, 801, 1101, 1403, 1703, 2001, 2201: soundness-determination implementation assessment unit,
251: regenerative braking characteristic,
1351: motor current,
1402: reference motor current calculation unit,

1451: motor current characteristic,
1452: motor current reference value,
1501: wheel slip/slide information,
1651: catenary current,
1652: auxiliary power,
1751: equipment efficiency,
1752: catenary current reference value,
2301: clustering processing unit,
2302: soundness determination processing unit,
2351: cluster space

## Claims

**1.** A system for determining soundness of regenerative braking for a target train, comprising:

a soundness-determination implementation assessment unit that assesses whether or not to determine the soundness of regenerative braking for the train from at least one piece of information related to the train, including operational command, train speed, wheel slip/slide, motor current, catenary current, and occupancy rate, and outputs a determination feasibility signal; and
a soundness assessment unit that calculates a regenerative braking force reference value on the basis of regenerative braking characteristics of the train from the operational command, the train speed, and the occupancy rate, estimates a regenerative braking restriction amount from the regenerative braking force reference value and a voltage of the train, and assesses presence or absence of an abnormality in regenerative braking on the basis of the regenerative braking force reference value, the regenerative braking restriction amount, a regenerative braking force of the train, and the determination feasibility signal.

**2.** The system for determining the soundness of regenerative braking according to claim 1, wherein the soundness assessment unit compares a difference value between an estimated regenerative braking force, which is a difference between the regenerative braking force reference value and the regenerative braking restriction amount, and the moment-to-moment regenerative braking force of the train, with a reference assessment value to assess the presence or absence of an abnormality in the regenerative braking.

**3.** The system for determining the soundness of regenerative braking according to claim 2, wherein the soundness-determination implementation assessment unit sets the determination feasibility signal to "possible" if the operational command indicates braking and does not fluctuate for a predetermined period of time or more.

**4.** The system for determining the soundness of regenerative braking according to claim 2, wherein the soundness-determination implementation assessment unit sets the determination feasibility signal to "possible" if the train speed is equal to or greater than a predetermined threshold.

**5.** The system for determining the soundness of regenerative braking according to claim 2, wherein the soundness-determination implementation assessment unit sets the determination feasibility signal to "not possible" in the event of wheel slip/slide in the train.

**6.** The system for determining the soundness of regenerative braking according to claim 5, wherein the soundness-determination implementation assessment unit calculates a motor current reference value of the train from the operational command, the occupancy rate, the train speed, and motor current characteristics of the train, and detects the occurrence of the wheel slip/slide on the basis of a difference value between the motor current reference value and the motor current of the train.

**7.** The system for determining the soundness of regenerative braking according to claim 5, wherein the soundness-determination implementation assessment unit calculates a catenary current reference value for the train from the operational command, the occupancy rate, the train speed, and equipment efficiency of the train, and detects the occurrence of the wheel slip/slide on the basis of a difference value between the catenary current reference value and the catenary current flowing in the train.

**8.** The system for determining the soundness of regenerative braking according to claim 2, wherein

the soundness-determination implementation assessment unit sets the determination feasibility signal to "not possible" if the occupancy rate while the train is traveling exceeds a predetermined threshold.

**9.** A system for determining soundness of regenerative braking for a target train, comprising:

a soundness-determination implementation assessment unit that assesses whether or not to determine the soundness of regenerative braking force for the train from at least one piece of information related to the train, including operational command, train speed, wheel slip/slide, motor current, catenary current, and occupancy rate, and outputs a determination feasibility signal; and
a soundness assessment unit that uses a cluster space obtained by cluster processing based on historical data of each of the operational command, the train speed, the occupancy rate, voltage, the regenerative braking force, of the train, and the determination feasibility signal, to assess presence or absence of an abnormality in regenerative braking.

**10.** The system for determining the soundness of regenerative braking according to any one of claims 1 to 9, wherein the soundness assessment unit detects an abnormality if the regenerative braking is assessed as abnormal multiple times.

**11.** The system for determining the soundness of regenerative braking according to any one of claims 1 to 9, further comprising
a function for displaying and outputting, at regular intervals, a ratio of number of times the regenerative braking is assessed as abnormal to total number of times the regenerative braking is assessed.

**12.** A method for determining soundness of regenerative braking for a target train, comprising:

assessing whether or not to determine the soundness of regenerative braking for the train from at least one piece of information related to the train, including operational command, train speed, wheel slip/slide, motor current, catenary current, and occupancy rate, and outputting a determination feasibility signal;
calculating a regenerative braking force reference value on the basis of regenerative braking characteristics of the train from the operational command, the train speed, and the occupancy rate;
estimating a regenerative braking restriction amount from the regenerative braking force reference value and a voltage of the train; and
assessing presence or absence of an abnormality in regenerative braking on the basis of the regenerative braking force reference value, the regenerative braking restriction amount, a regenerative braking force of the train, and the determination feasibility signal.

**13.** The method for determining the soundness of regenerative braking according to claim 12, wherein
a difference value between an estimated regenerative braking force, which is a difference between the regenerative braking force reference value and the regenerative braking restriction amount, and the moment-to-moment regenerative braking force of the train is compared with a reference assessment value to assess the presence or absence of an abnormality in the regenerative braking.

**14.** The method for determining the soundness of regenerative braking according to claim 12 or 13, wherein
the determination feasibility signal is set to "possible" if the operational command indicates braking and does not fluctuate for a predetermined period of time or more.

**15.** The method for determining the soundness of regenerative braking according to claim 12 or 13, wherein
the determination feasibility signal is set to "not possible" in the event of wheel slip/slide in the train.

FIG. 1

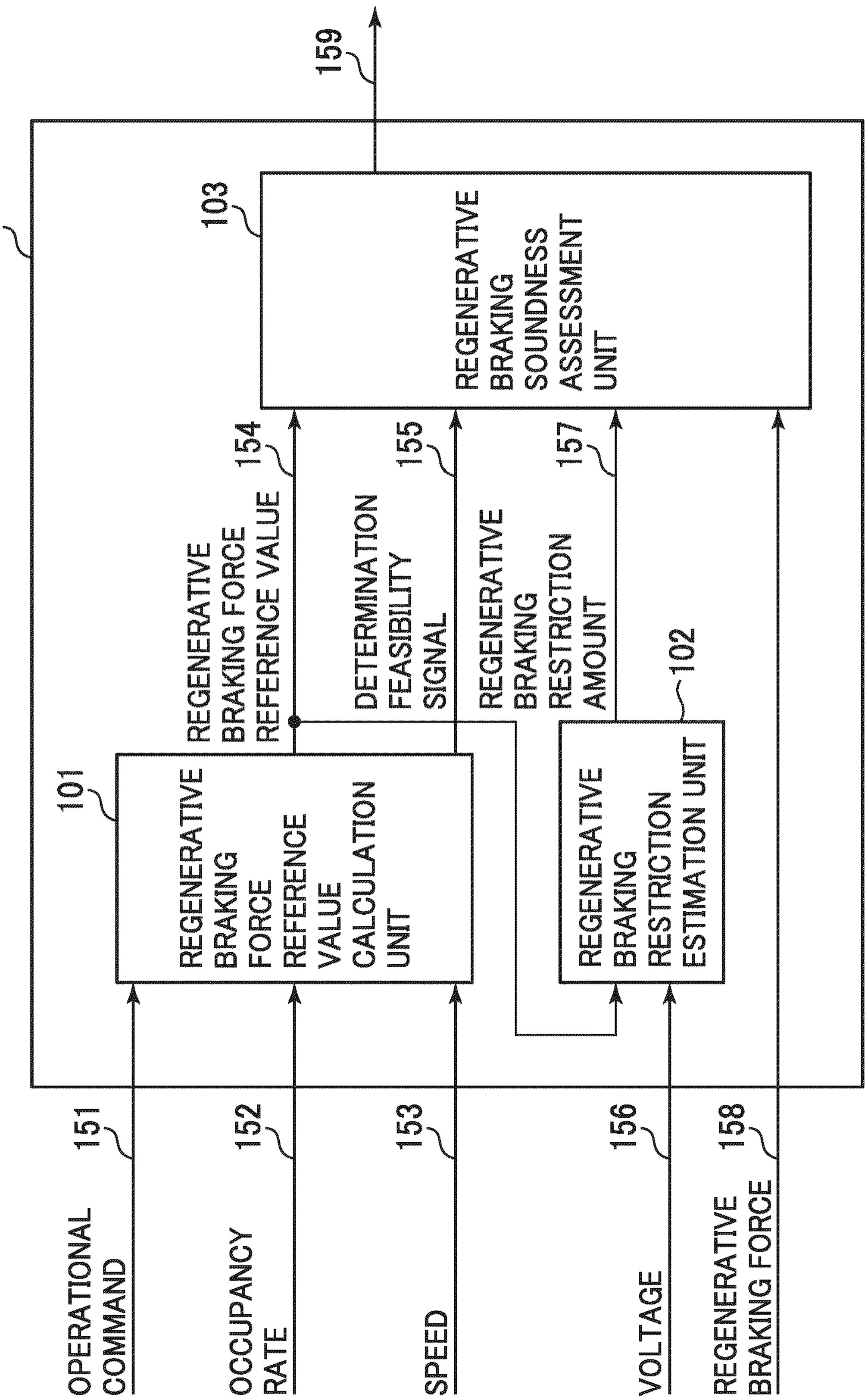
104
103
REGENERATIVE BRAKING SOUNDNESS ASSESSMENT UNIT
159
101
REGENERATIVE BRAKING FORCE REFERENCE VALUE CALCULATION UNIT
102
REGENERATIVE BRAKING RESTRICTION ESTIMATION UNIT
REGENERATIVE BRAKING FORCE REFERENCE VALUE
154
DETERMINATION FEASIBILITY SIGNAL
155
REGENERATIVE BRAKING RESTRICTION AMOUNT
157
OPERATIONAL COMMAND
151
OCCUPANCY RATE
152
SPEED
153
VOLTAGE
156
REGENERATIVE BRAKING FORCE
158

FIG. 2

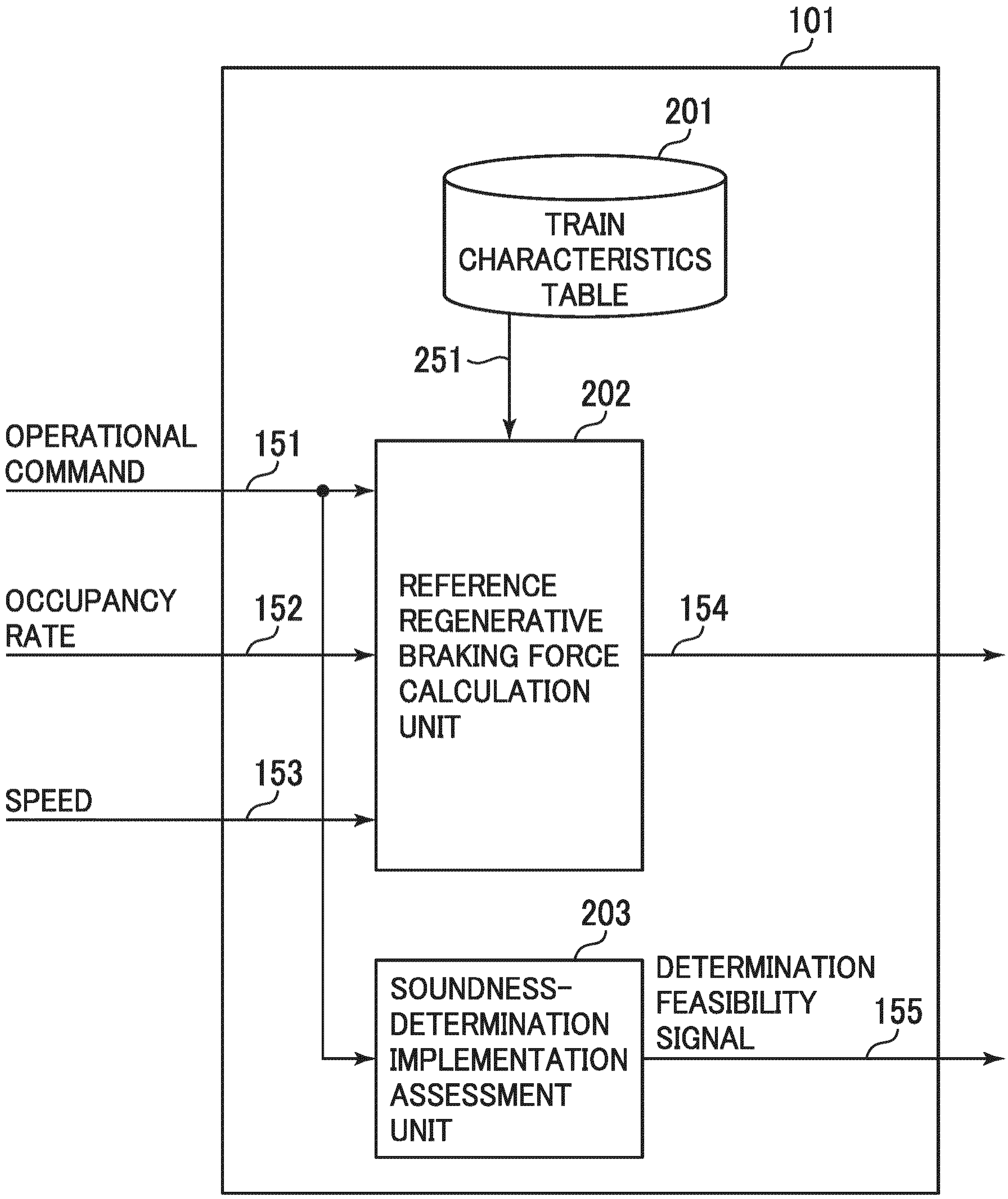
101
201
TRAIN CHARACTERISTICS TABLE
251
202
OPERATIONAL COMMAND
151
OCCUPANCY RATE
152
SPEED
153
REFERENCE REGENERATIVE BRAKING FORCE CALCULATION UNIT
154
203
SOUNDNESS-DETERMINATION IMPLEMENTATION ASSESSMENT UNIT
DETERMINATION FEASIBILITY SIGNAL
155

FIG. 3

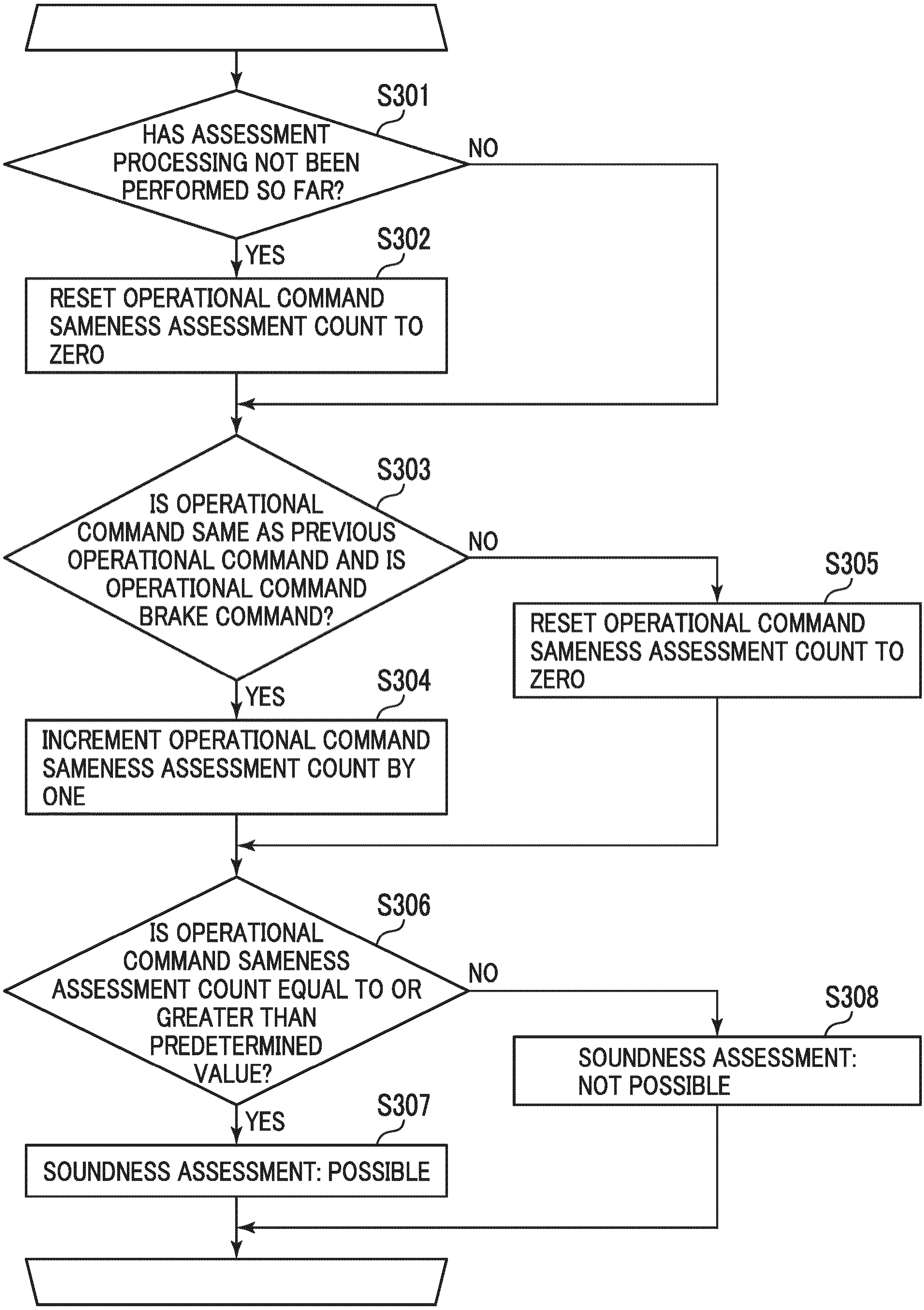
S301
HAS ASSESSMENT PROCESSING NOT BEEN PERFORMED SO FAR?
NO
YES
S302
RESET OPERATIONAL COMMAND SAMENESS ASSESSMENT COUNT TO ZERO
S303
IS OPERATIONAL COMMAND SAME AS PREVIOUS OPERATIONAL COMMAND AND IS OPERATIONAL COMMAND BRAKE COMMAND?
NO
S305
RESET OPERATIONAL COMMAND SAMENESS ASSESSMENT COUNT TO ZERO
YES
S304
INCREMENT OPERATIONAL COMMAND SAMENESS ASSESSMENT COUNT BY ONE
S306
IS OPERATIONAL COMMAND SAMENESS ASSESSMENT COUNT EQUAL TO OR GREATER THAN PREDETERMINED VALUE?
NO
S308
SOUNDNESS ASSESSMENT: NOT POSSIBLE
YES
S307
SOUNDNESS ASSESSMENT: POSSIBLE

FIG. 4

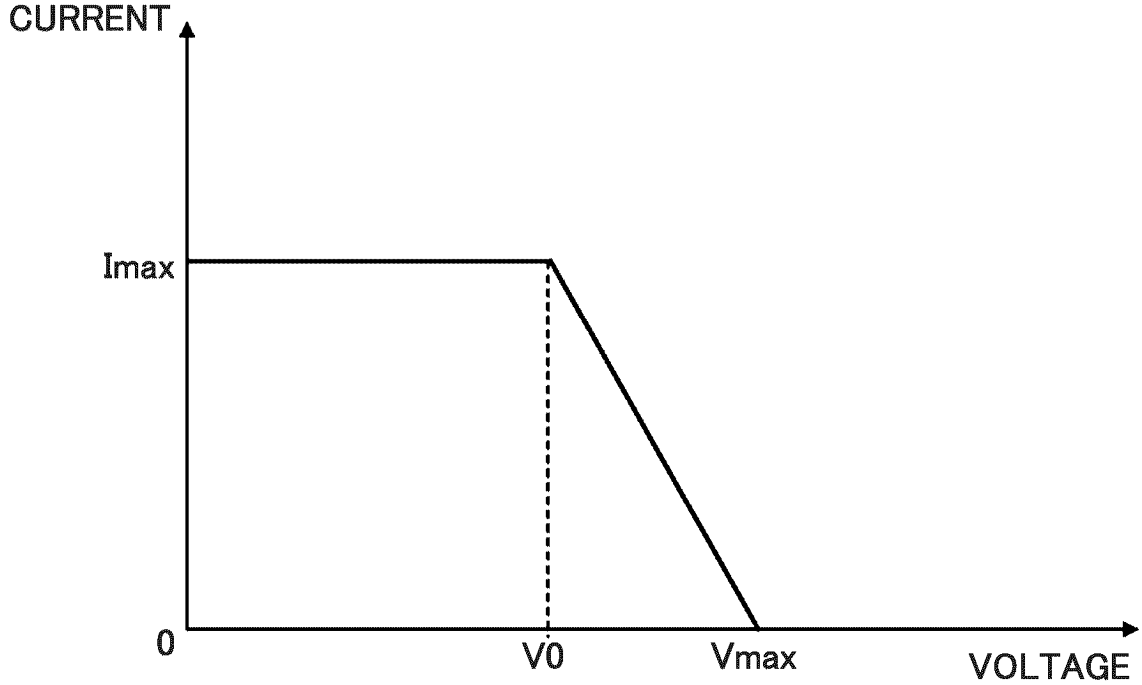

FIG. 5

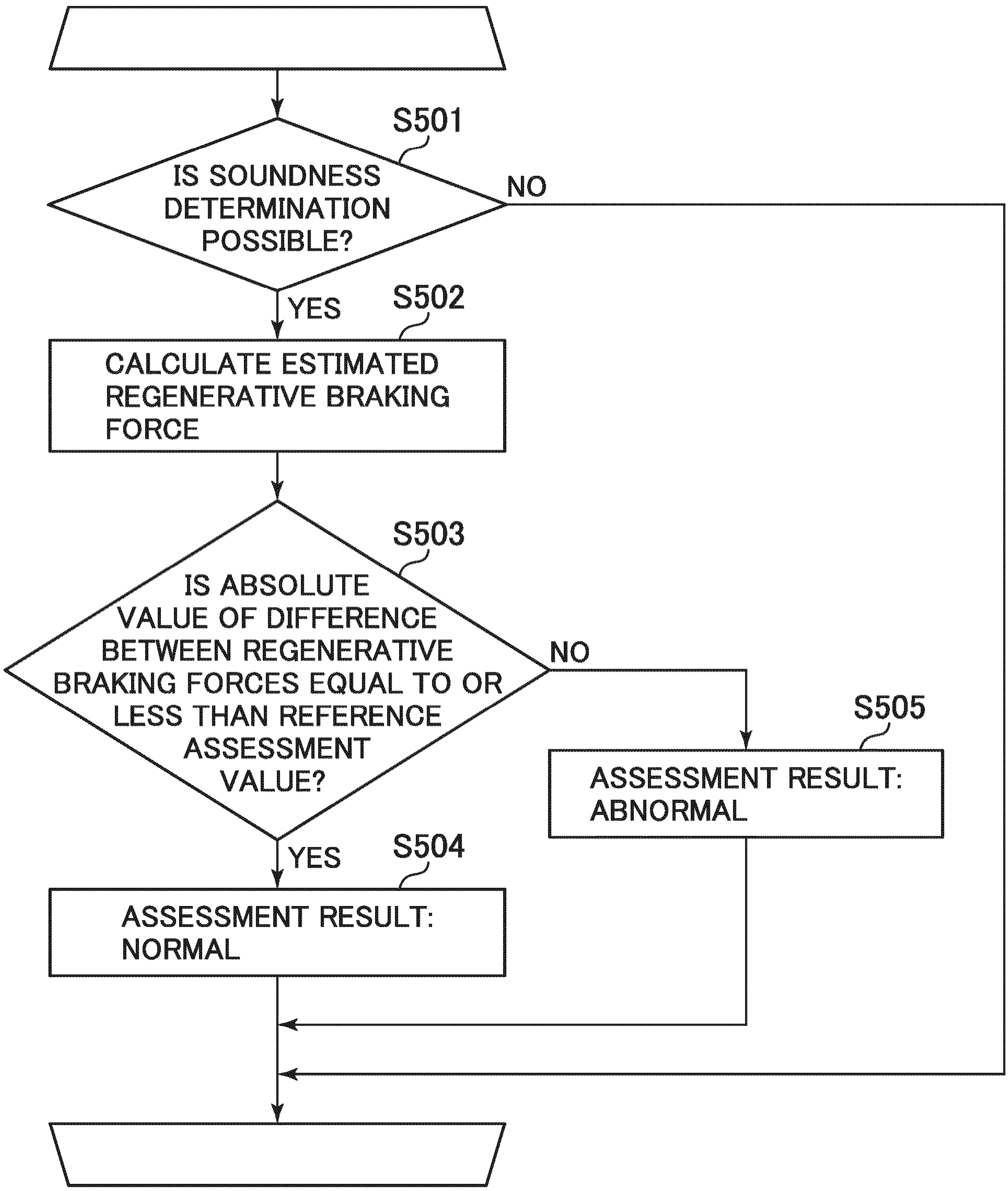
S501
IS SOUNDNESS DETERMINATION POSSIBLE?
NO
YES
S502
CALCULATE ESTIMATED REGENERATIVE BRAKING FORCE
S503
IS ABSOLUTE VALUE OF DIFFERENCE BETWEEN REGENERATIVE BRAKING FORCES EQUAL TO OR LESS THAN REFERENCE ASSESSMENT VALUE?
NO
S505
ASSESSMENT RESULT: ABNORMAL
YES
S504
ASSESSMENT RESULT: NORMAL

FIG. 6

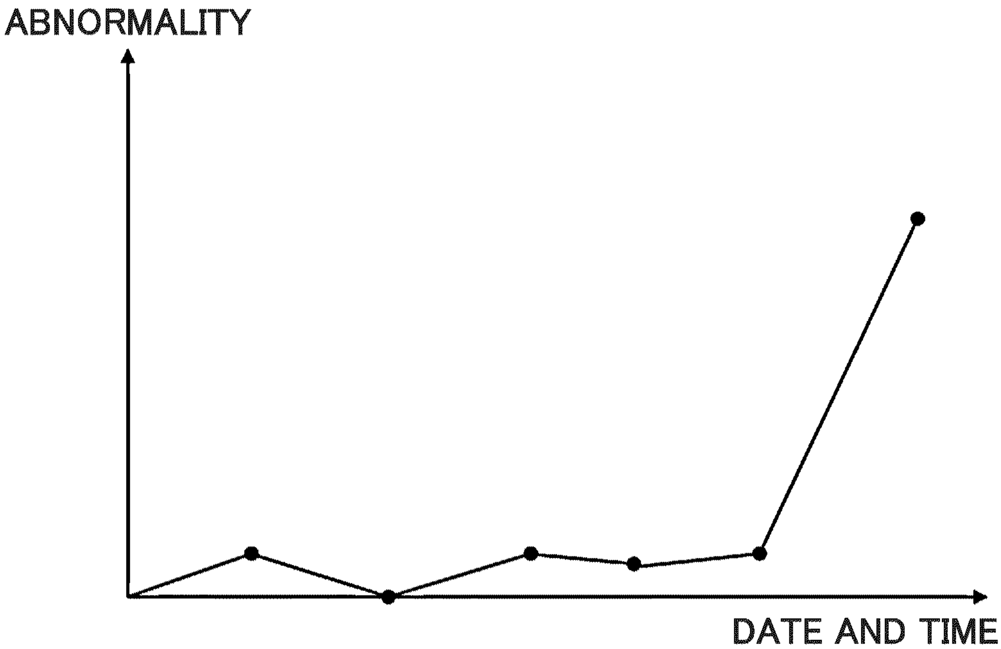

FIG. 7

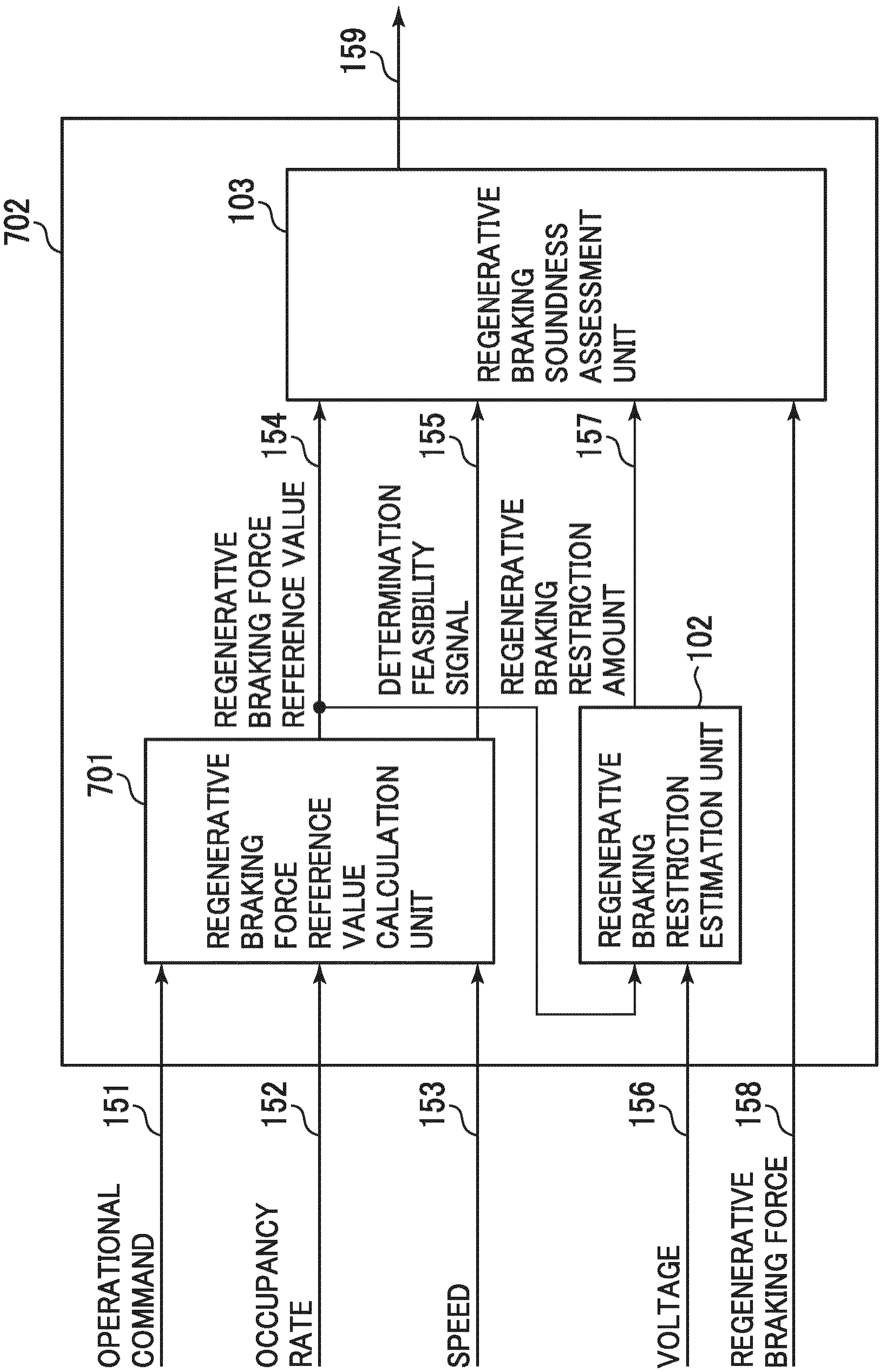
702
159
103
REGENERATIVE BRAKING SOUNDNESS ASSESSMENT UNIT
154
REGENERATIVE BRAKING FORCE REFERENCE VALUE
155
DETERMINATION FEASIBILITY SIGNAL
157
REGENERATIVE BRAKING RESTRICTION AMOUNT
102
701
REGENERATIVE BRAKING FORCE REFERENCE VALUE CALCULATION UNIT
REGENERATIVE BRAKING RESTRICTION ESTIMATION UNIT
151
OPERATIONAL COMMAND
152
OCCUPANCY RATE
153
SPEED
156
VOLTAGE
158
REGENERATIVE BRAKING FORCE

FIG. 8

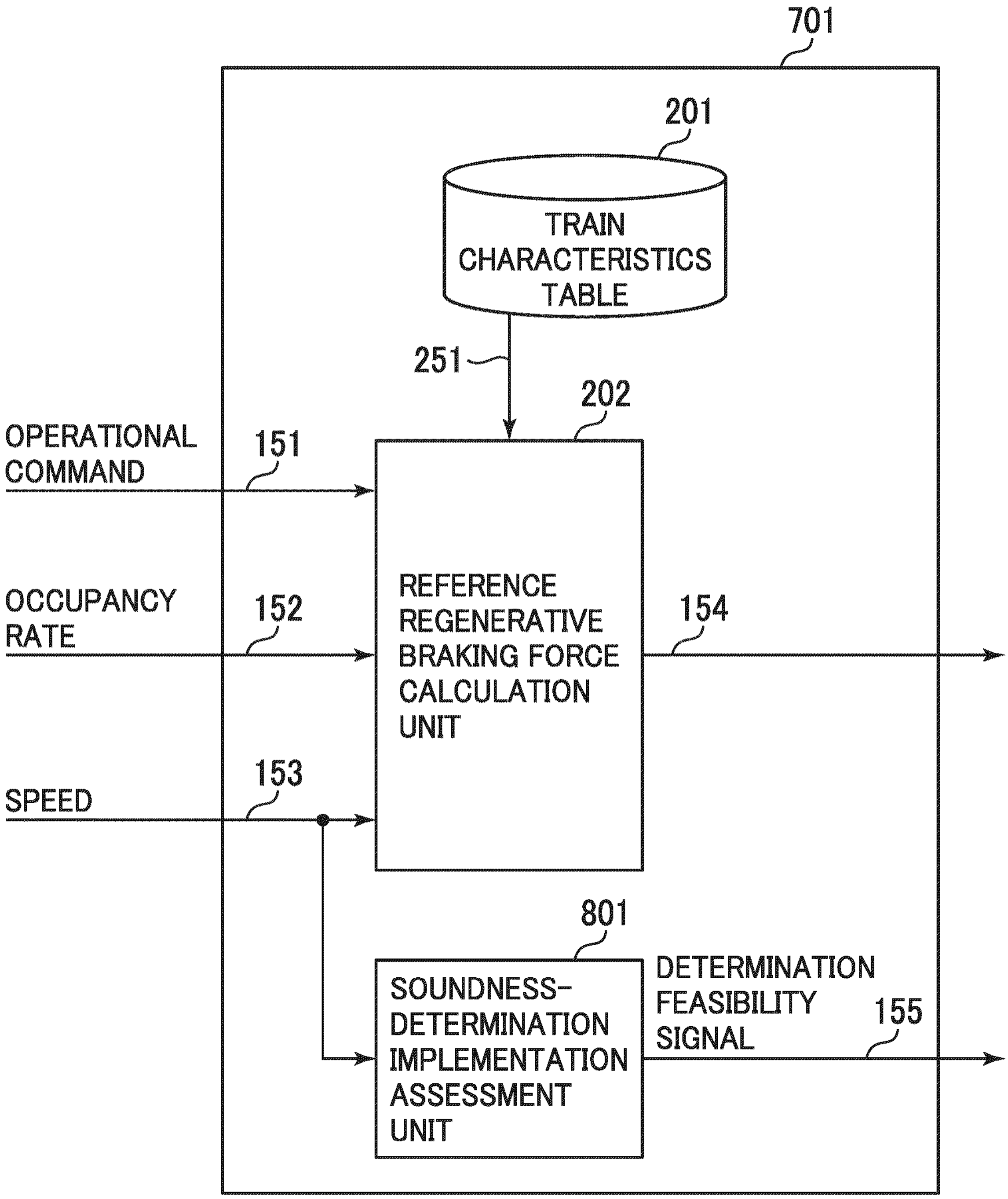
701
201
TRAIN CHARACTERISTICS TABLE
251
202
OPERATIONAL COMMAND
151
OCCUPANCY RATE
152
SPEED
153
REFERENCE REGENERATIVE BRAKING FORCE CALCULATION UNIT
154
801
SOUNDNESS-DETERMINATION IMPLEMENTATION ASSESSMENT UNIT
DETERMINATION FEASIBILITY SIGNAL
155

FIG. 9

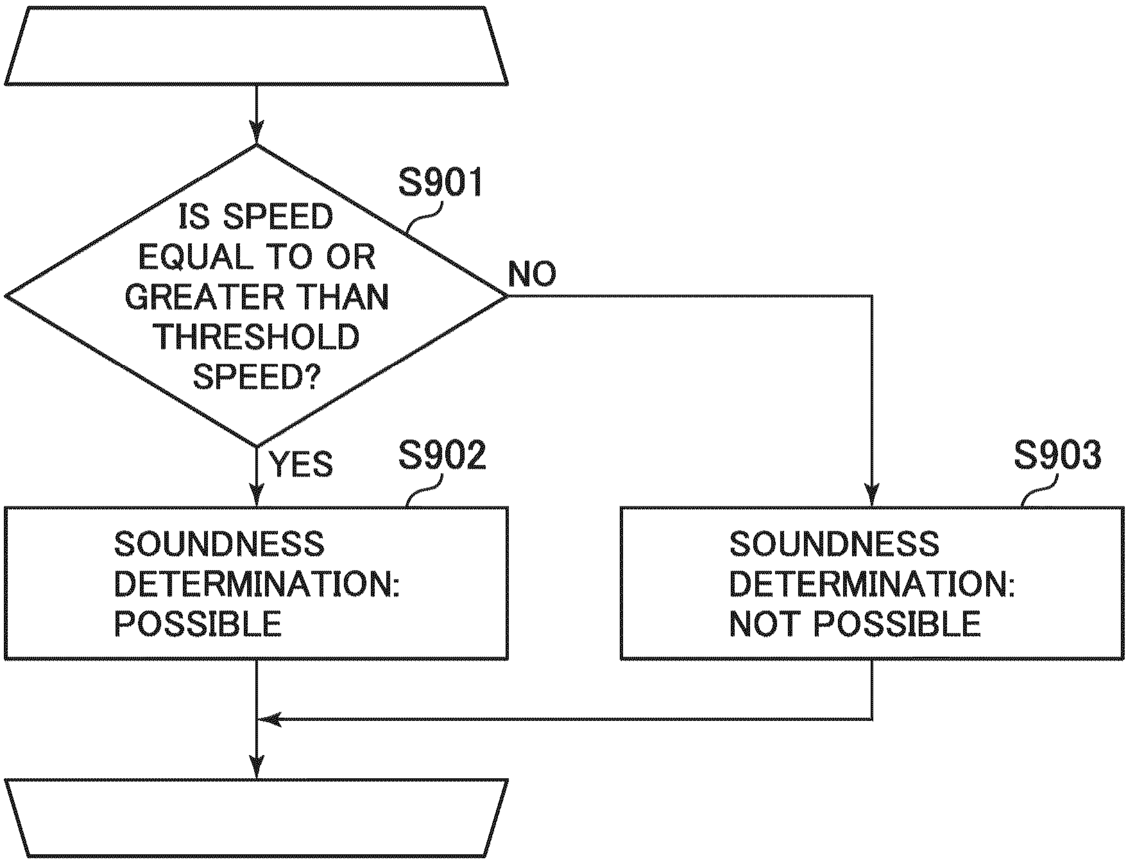
S901
IS SPEED EQUAL TO OR GREATER THAN THRESHOLD SPEED?
NO
YES
S902
SOUNDNESS DETERMINATION: POSSIBLE
S903
SOUNDNESS DETERMINATION: NOT POSSIBLE

FIG. 10

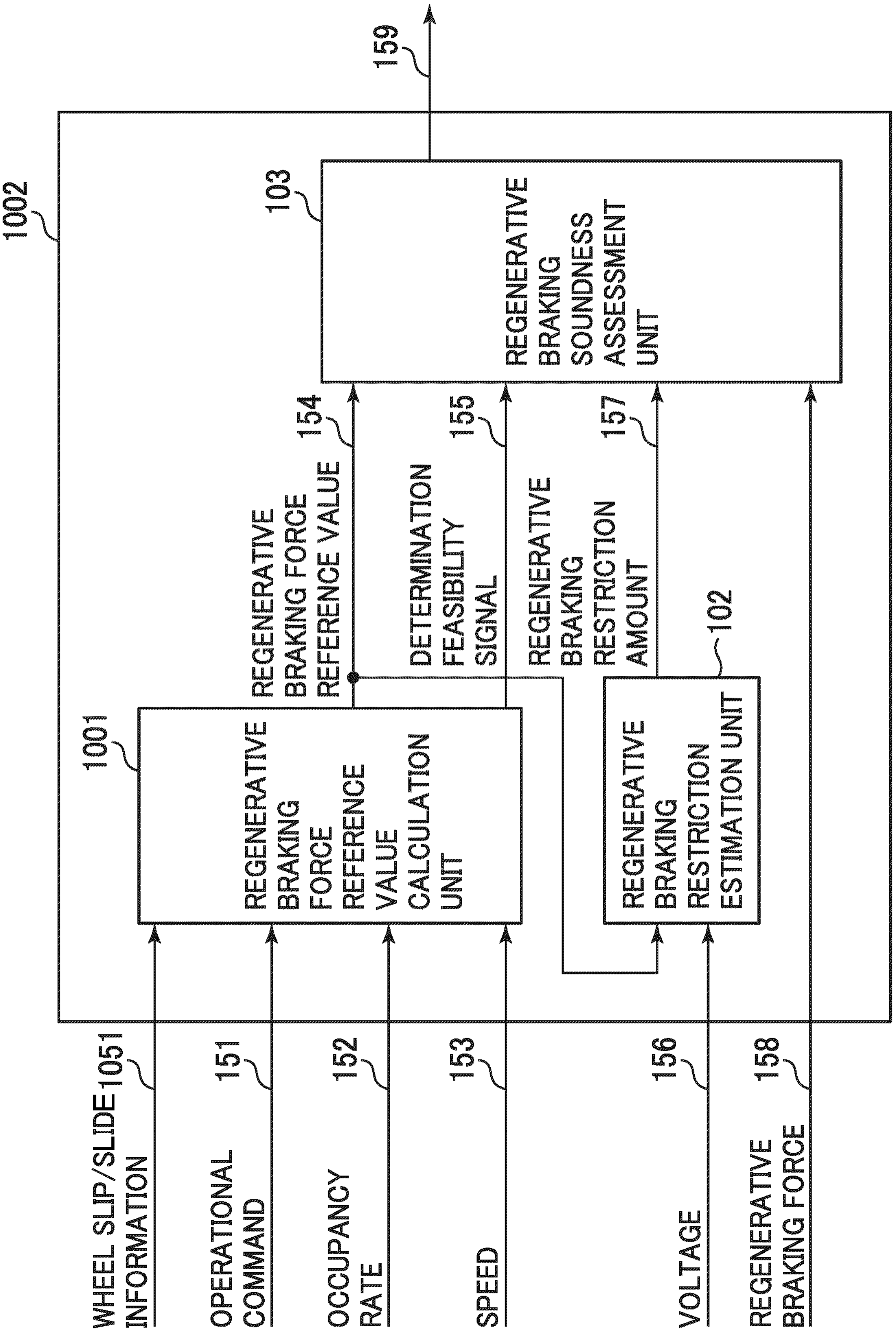
1002
1001
REGENERATIVE BRAKING FORCE REFERENCE VALUE CALCULATION UNIT
102
REGENERATIVE BRAKING RESTRICTION ESTIMATION UNIT
103
REGENERATIVE BRAKING SOUNDNESS ASSESSMENT UNIT
WHEEL SLIP/SLIDE INFORMATION
1051
OPERATIONAL COMMAND
151
OCCUPANCY RATE
152
SPEED
153
VOLTAGE
156
REGENERATIVE BRAKING FORCE
158
REGENERATIVE BRAKING FORCE REFERENCE VALUE
154
DETERMINATION FEASIBILITY SIGNAL
155
REGENERATIVE BRAKING RESTRICTION AMOUNT
157
159

FIG. 11

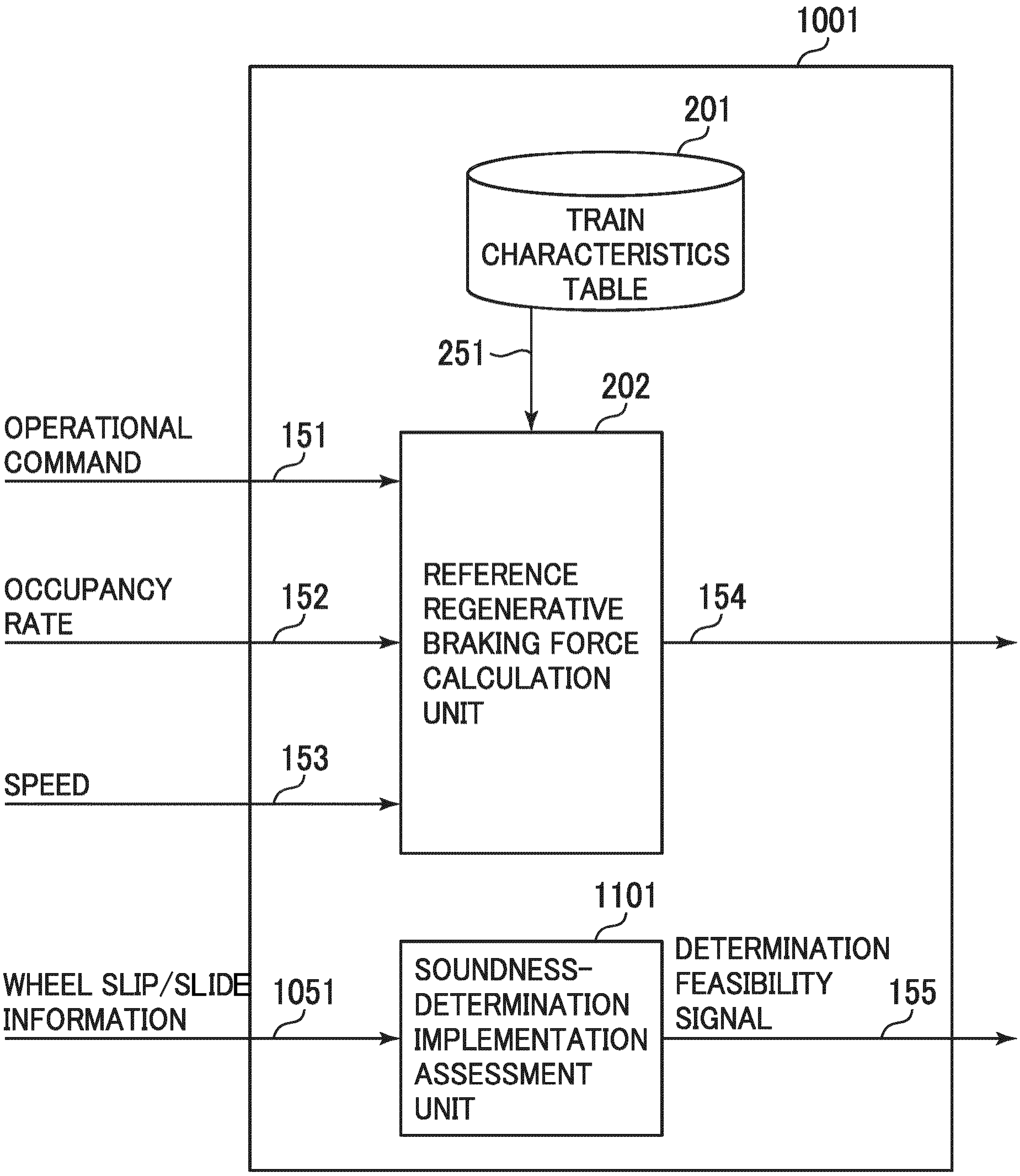
1001
201
TRAIN CHARACTERISTICS TABLE
251
202
OPERATIONAL COMMAND
151
OCCUPANCY RATE
152
SPEED
153
REFERENCE REGENERATIVE BRAKING FORCE CALCULATION UNIT
154
1101
WHEEL SLIP/SLIDE INFORMATION
1051
SOUNDNESS-DETERMINATION IMPLEMENTATION ASSESSMENT UNIT
DETERMINATION FEASIBILITY SIGNAL
155

FIG. 12

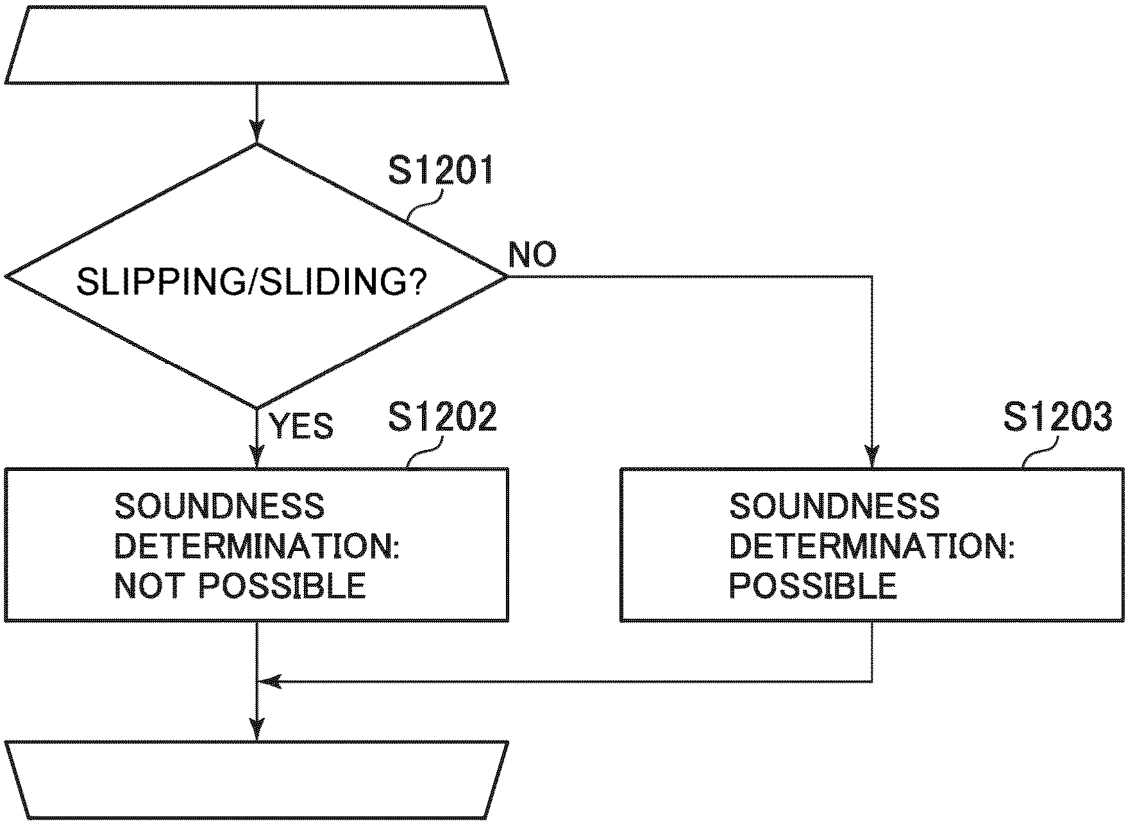
S1201
SLIPPING/SLIDING?
NO
YES
S1202
S1203
SOUNDNESS DETERMINATION: NOT POSSIBLE
SOUNDNESS DETERMINATION: POSSIBLE

FIG. 13

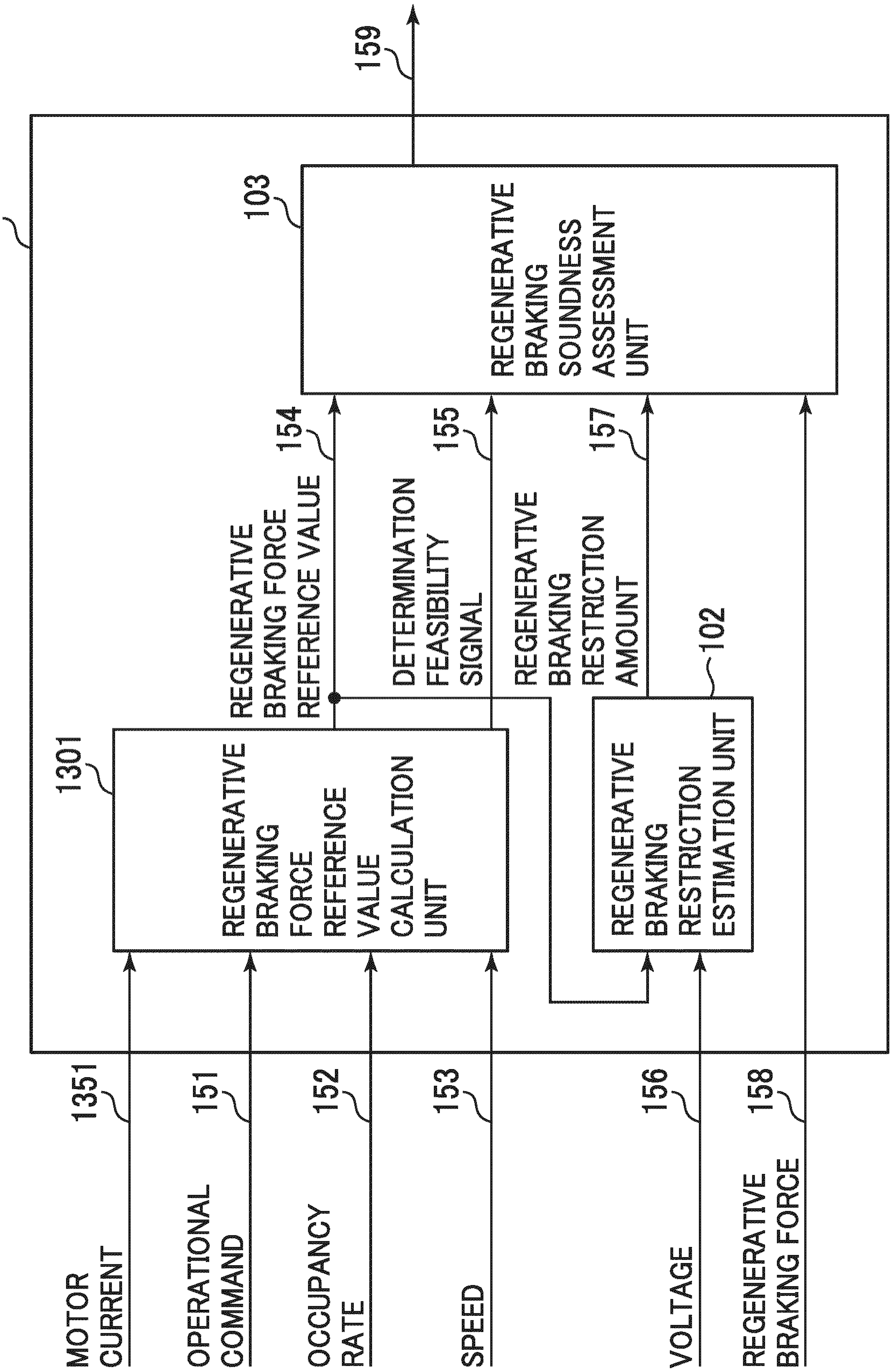
1302
1301
REGENERATIVE BRAKING FORCE REFERENCE VALUE CALCULATION UNIT
102
REGENERATIVE BRAKING RESTRICTION ESTIMATION UNIT
103
REGENERATIVE BRAKING SOUNDNESS ASSESSMENT UNIT
154
REGENERATIVE BRAKING FORCE REFERENCE VALUE
155
DETERMINATION FEASIBILITY SIGNAL
157
REGENERATIVE BRAKING RESTRICTION AMOUNT
159
1351
MOTOR CURRENT
151
OPERATIONAL COMMAND
152
OCCUPANCY RATE
153
SPEED
156
VOLTAGE
158
REGENERATIVE BRAKING FORCE

FIG. 14

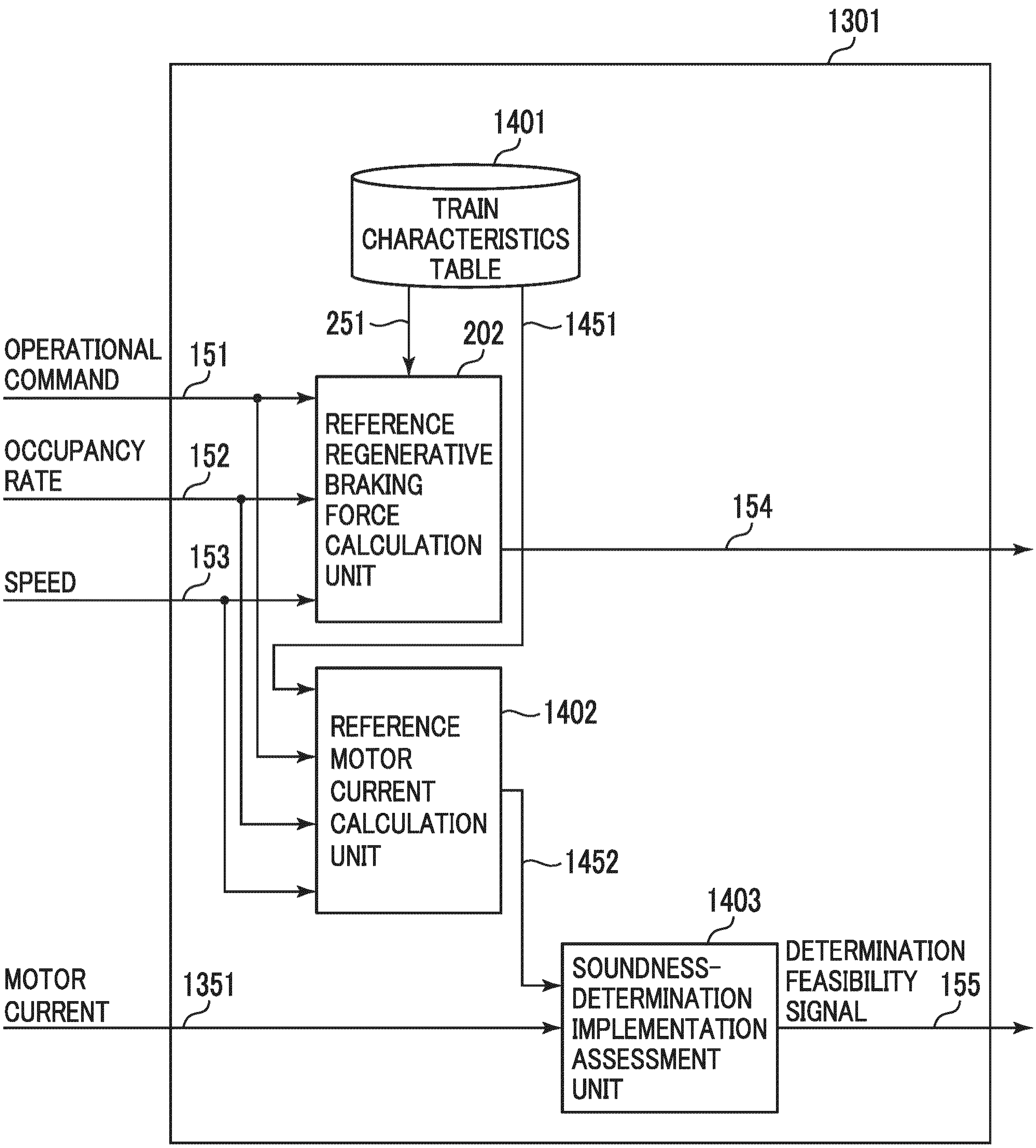
1301
1401
TRAIN CHARACTERISTICS TABLE
251
202
1451
OPERATIONAL COMMAND
151
OCCUPANCY RATE
152
SPEED
153
REFERENCE REGENERATIVE BRAKING FORCE CALCULATION UNIT
154
REFERENCE MOTOR CURRENT CALCULATION UNIT
1402
1452
1403
SOUNDNESS-DETERMINATION IMPLEMENTATION ASSESSMENT UNIT
DETERMINATION FEASIBILITY SIGNAL
155
MOTOR CURRENT
1351

FIG. 15

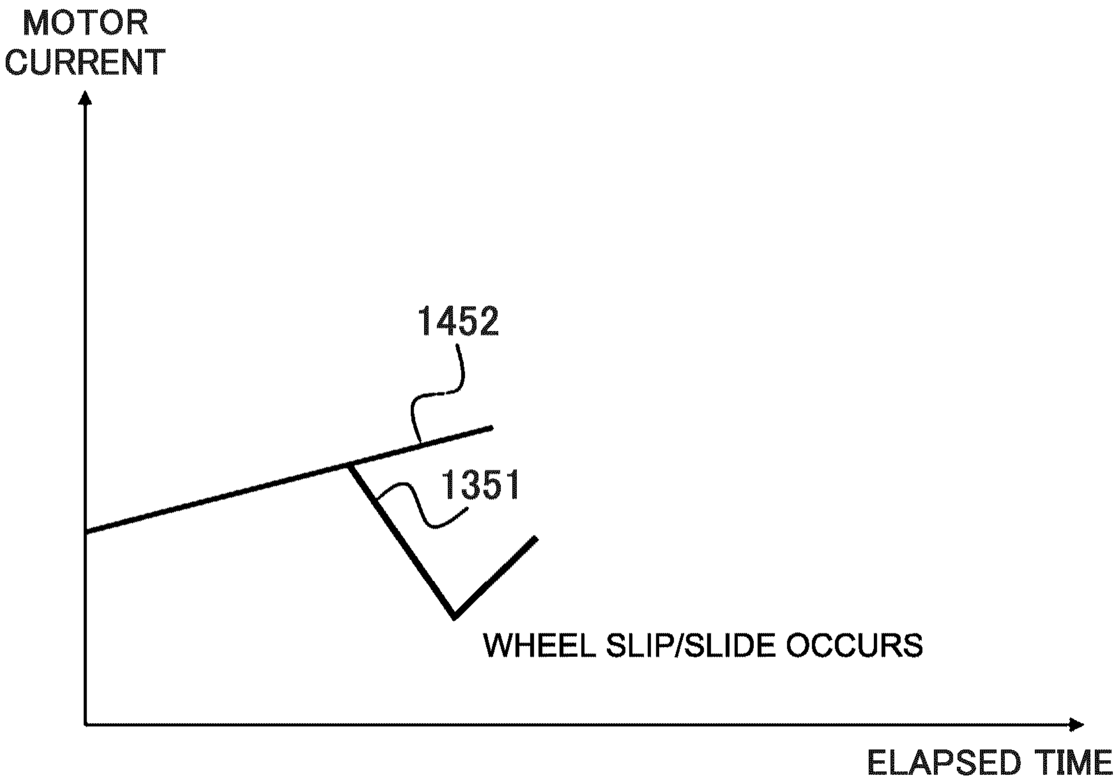
MOTOR
CURRENT
1452
1351
WHEEL SLIP/SLIDE OCCURS
ELAPSED TIME

FIG. 16

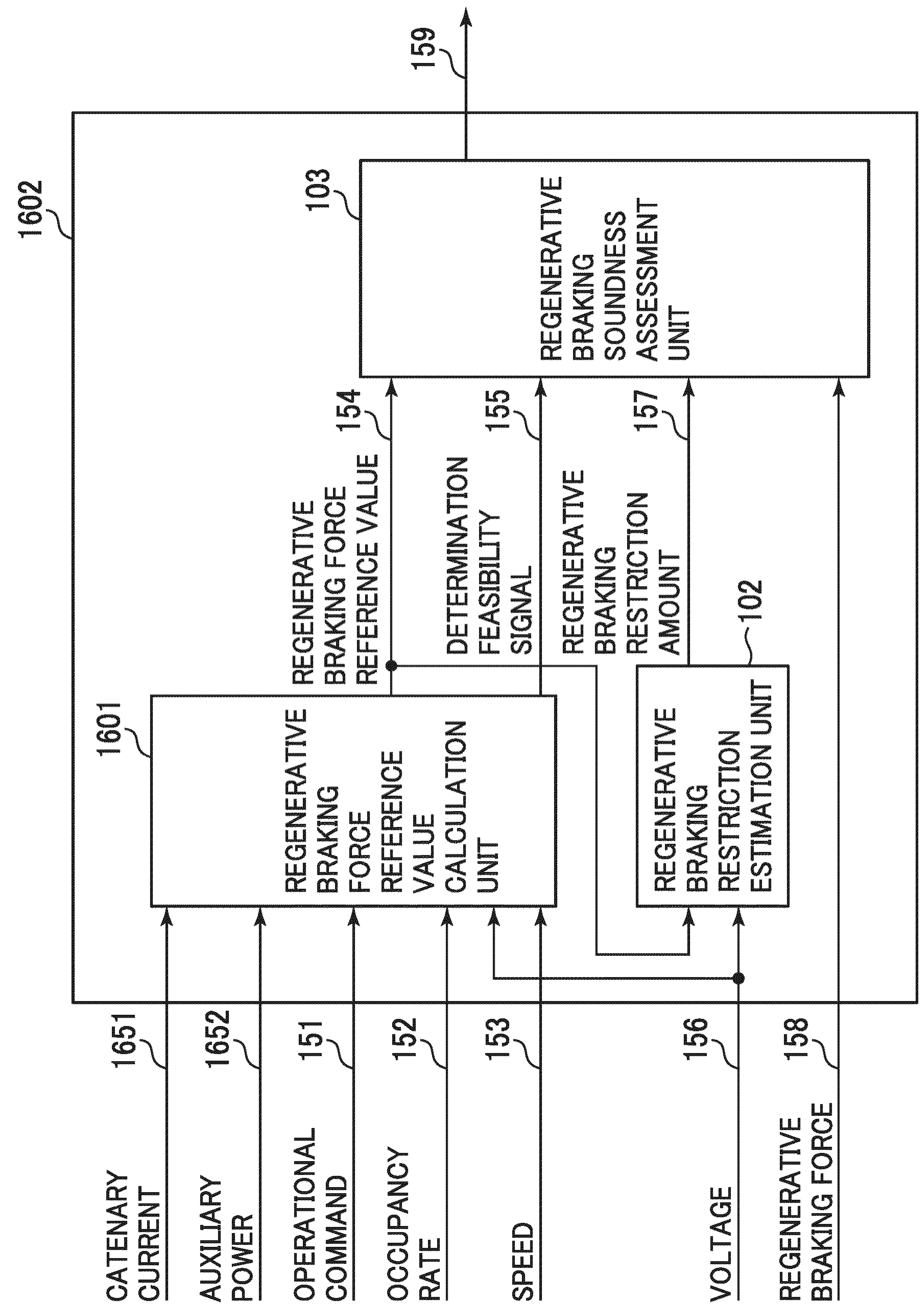
159
1602
103
REGENERATIVE BRAKING SOUNDNESS ASSESSMENT UNIT
154
155
157
REGENERATIVE BRAKING FORCE REFERENCE VALUE
DETERMINATION FEASIBILITY SIGNAL
REGENERATIVE BRAKING RESTRICTION AMOUNT
102
1601
REGENERATIVE BRAKING FORCE REFERENCE VALUE CALCULATION UNIT
REGENERATIVE BRAKING RESTRICTION ESTIMATION UNIT
1651
1652
151
152
153
156
158
CATENARY CURRENT
AUXILIARY POWER
OPERATIONAL COMMAND
OCCUPANCY RATE
SPEED
VOLTAGE
REGENERATIVE BRAKING FORCE

FIG. 17

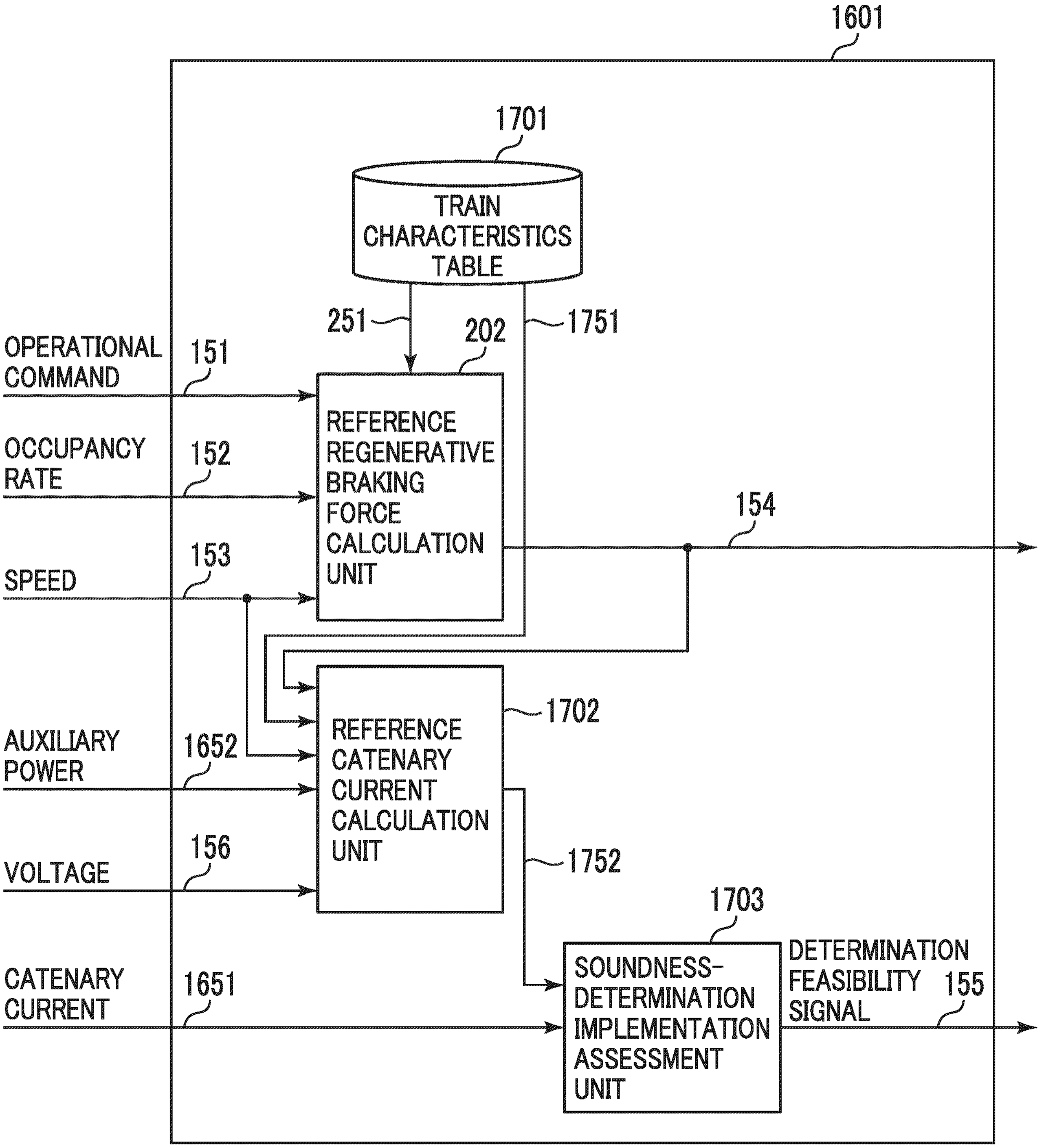
1601
1701
TRAIN CHARACTERISTICS TABLE
251
202
1751
OPERATIONAL COMMAND
151
OCCUPANCY RATE
152
REFERENCE REGENERATIVE BRAKING FORCE CALCULATION UNIT
154
SPEED
153
1702
AUXILIARY POWER
1652
REFERENCE CATENARY CURRENT CALCULATION UNIT
VOLTAGE
156
1752
1703
CATENARY CURRENT
1651
SOUNDNESS-DETERMINATION IMPLEMENTATION ASSESSMENT UNIT
DETERMINATION FEASIBILITY SIGNAL
155

FIG. 18

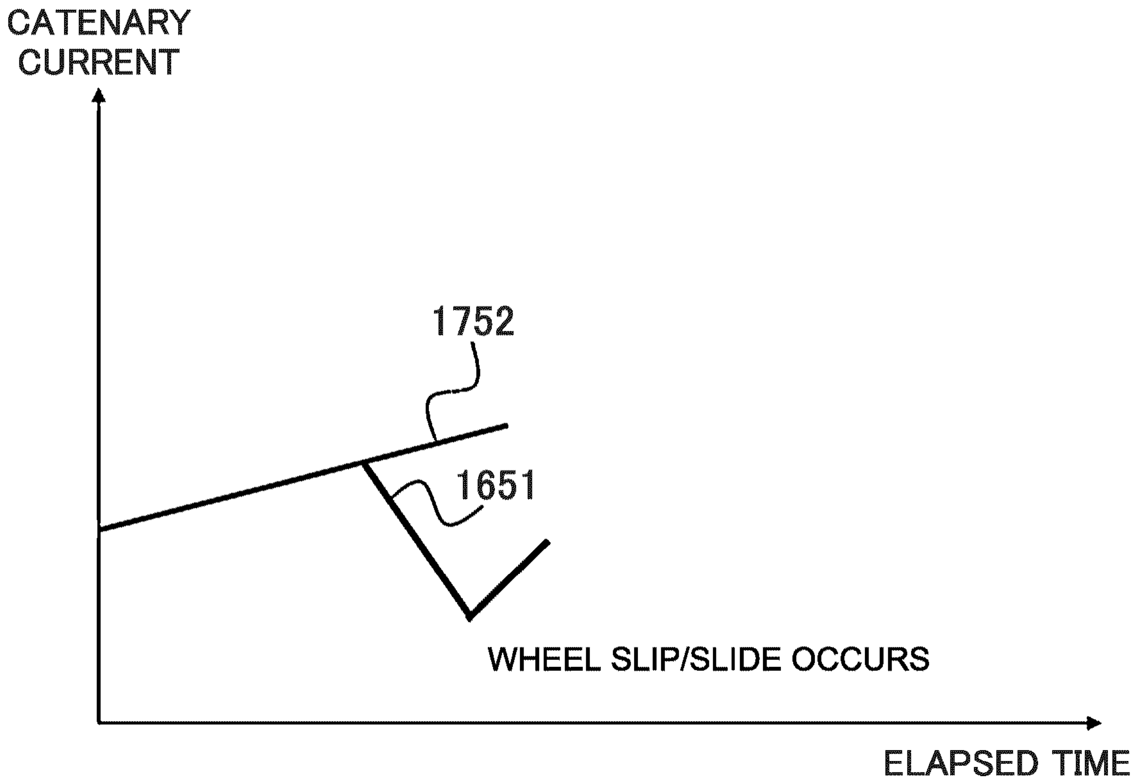
CATENARY CURRENT
1752
1651
WHEEL SLIP/SLIDE OCCURS
ELAPSED TIME

FIG. 19

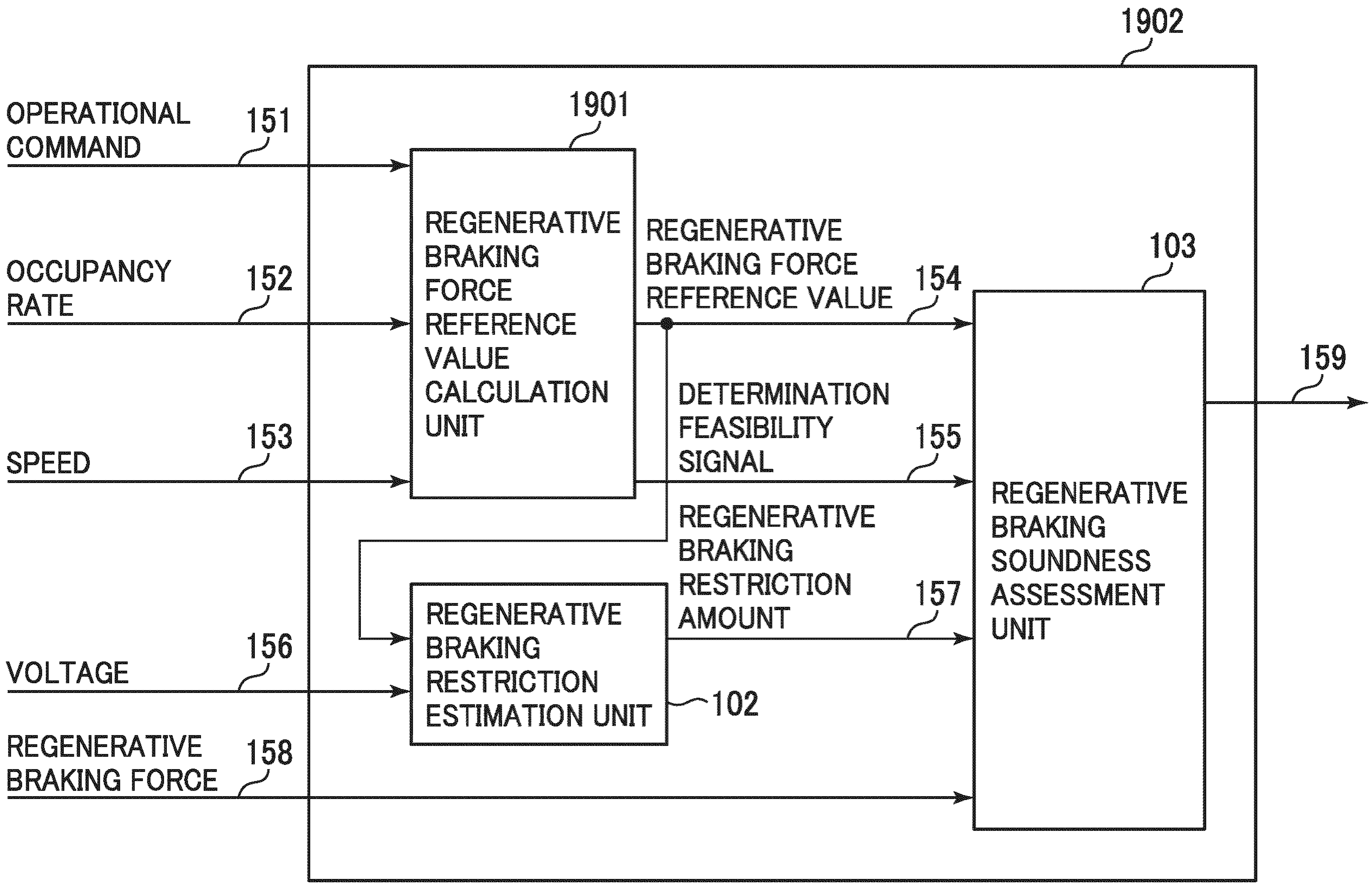
1902
OPERATIONAL COMMAND
151
OCCUPANCY RATE
152
SPEED
153
VOLTAGE
156
REGENERATIVE BRAKING FORCE
158
1901
REGENERATIVE BRAKING FORCE REFERENCE VALUE CALCULATION UNIT
REGENERATIVE BRAKING FORCE REFERENCE VALUE
154
DETERMINATION FEASIBILITY SIGNAL
155
REGENERATIVE BRAKING RESTRICTION AMOUNT
157
REGENERATIVE BRAKING RESTRICTION ESTIMATION UNIT
102
103
REGENERATIVE BRAKING SOUNDNESS ASSESSMENT UNIT
159

FIG. 20

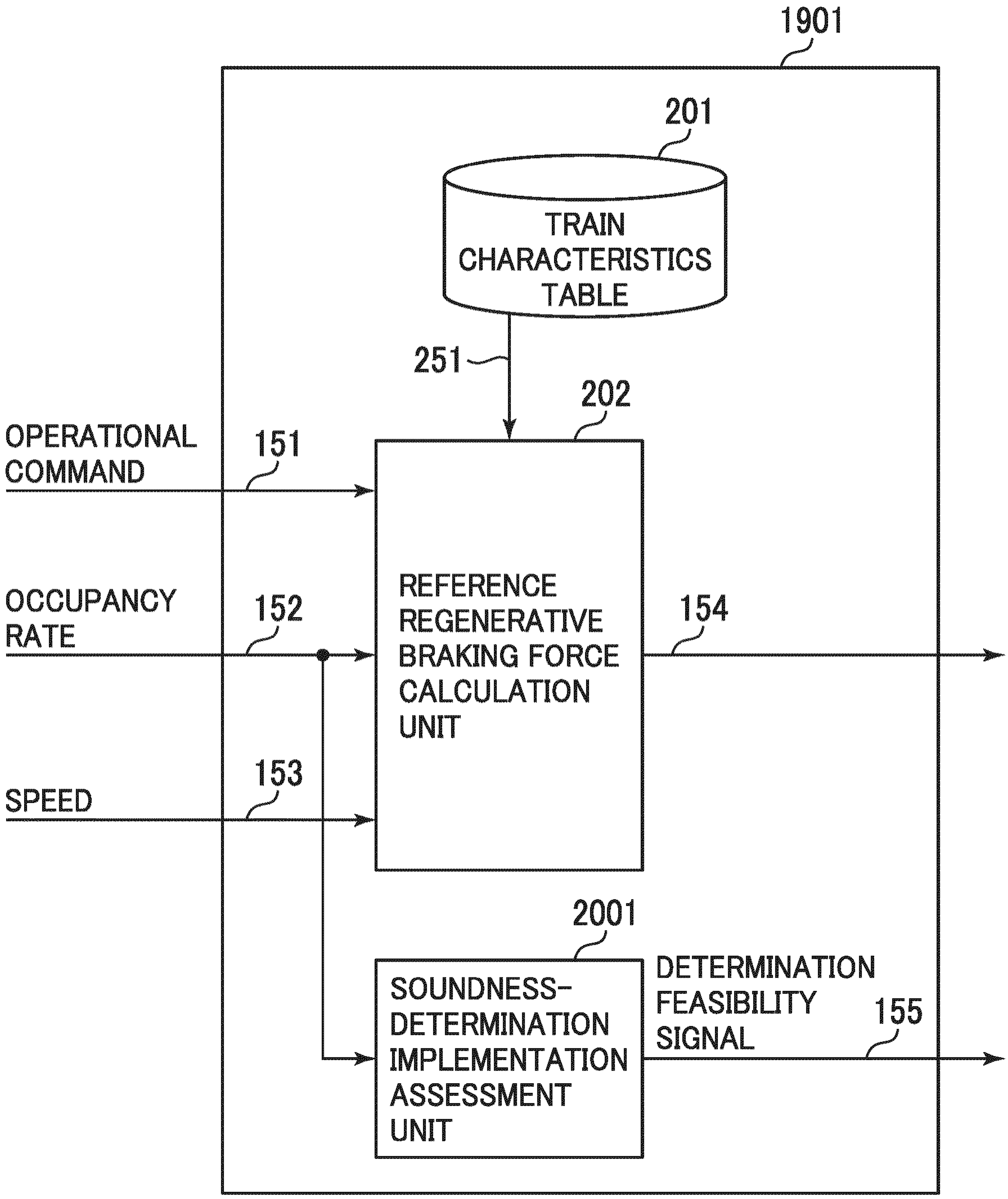
1901
201
TRAIN CHARACTERISTICS TABLE
251
202
OPERATIONAL COMMAND
151
OCCUPANCY RATE
152
SPEED
153
REFERENCE REGENERATIVE BRAKING FORCE CALCULATION UNIT
154
2001
SOUNDNESS-DETERMINATION IMPLEMENTATION ASSESSMENT UNIT
DETERMINATION FEASIBILITY SIGNAL
155

FIG. 21

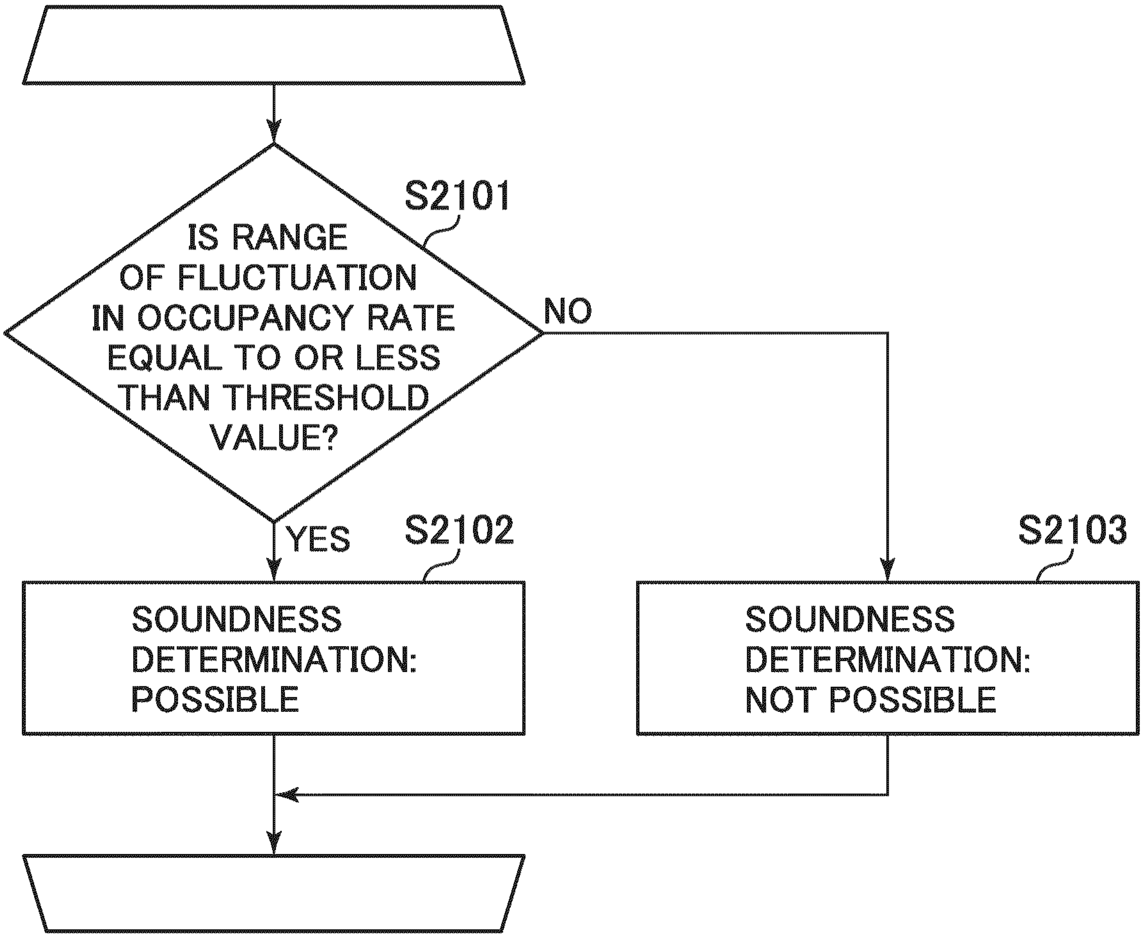
S2101
IS RANGE OF FLUCTUATION IN OCCUPANCY RATE EQUAL TO OR LESS THAN THRESHOLD VALUE?
NO
YES
S2102
SOUNDNESS DETERMINATION: POSSIBLE
S2103
SOUNDNESS DETERMINATION: NOT POSSIBLE

FIG. 22

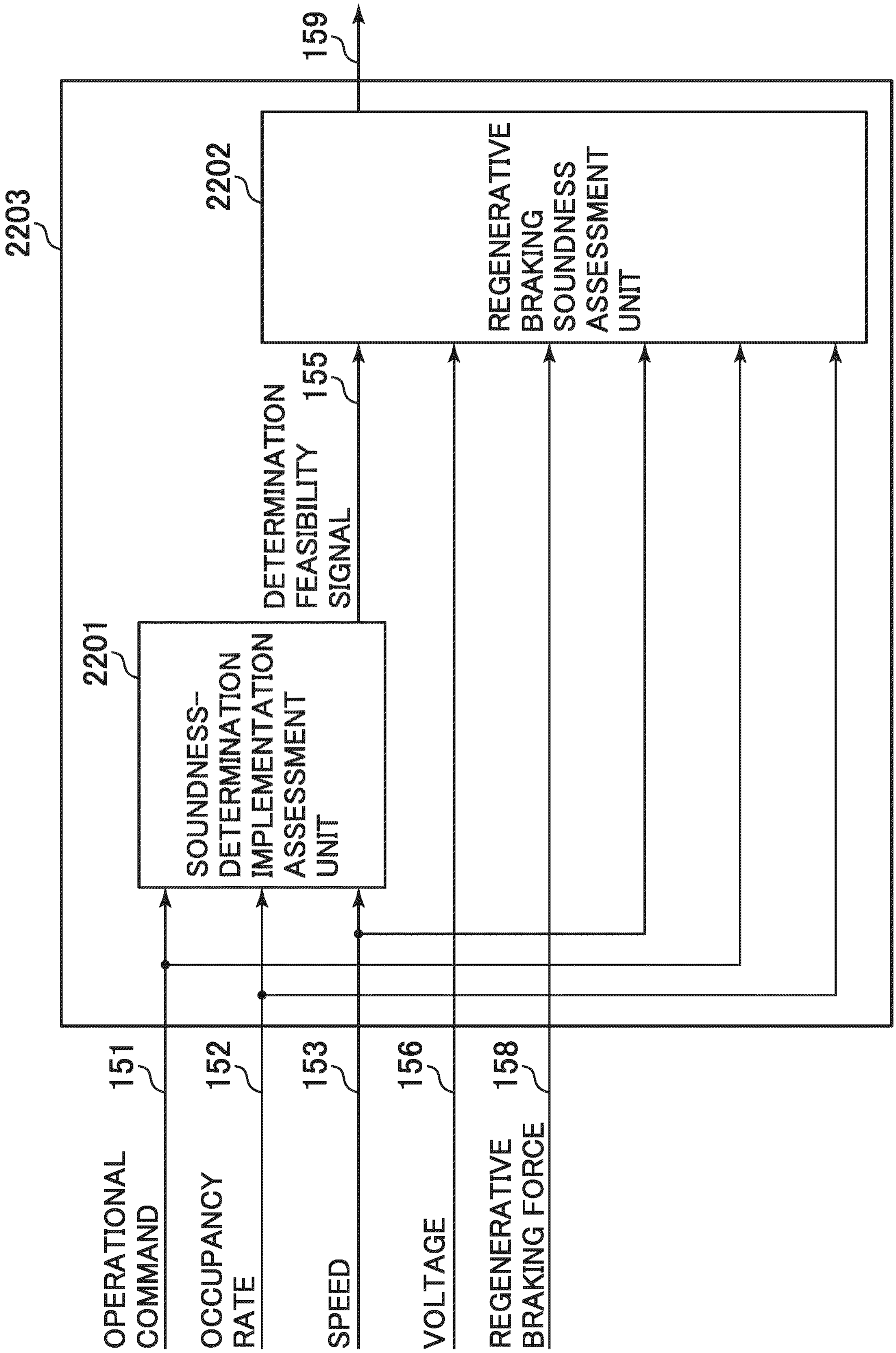
2203
2202
REGENERATIVE BRAKING SOUNDNESS ASSESSMENT UNIT
159
2201
SOUNDNESS-DETERMINATION IMPLEMENTATION ASSESSMENT UNIT
DETERMINATION FEASIBILITY SIGNAL
155
151
152
153
156
158
OPERATIONAL COMMAND
OCCUPANCY RATE
SPEED
VOLTAGE
REGENERATIVE BRAKING FORCE

FIG. 23

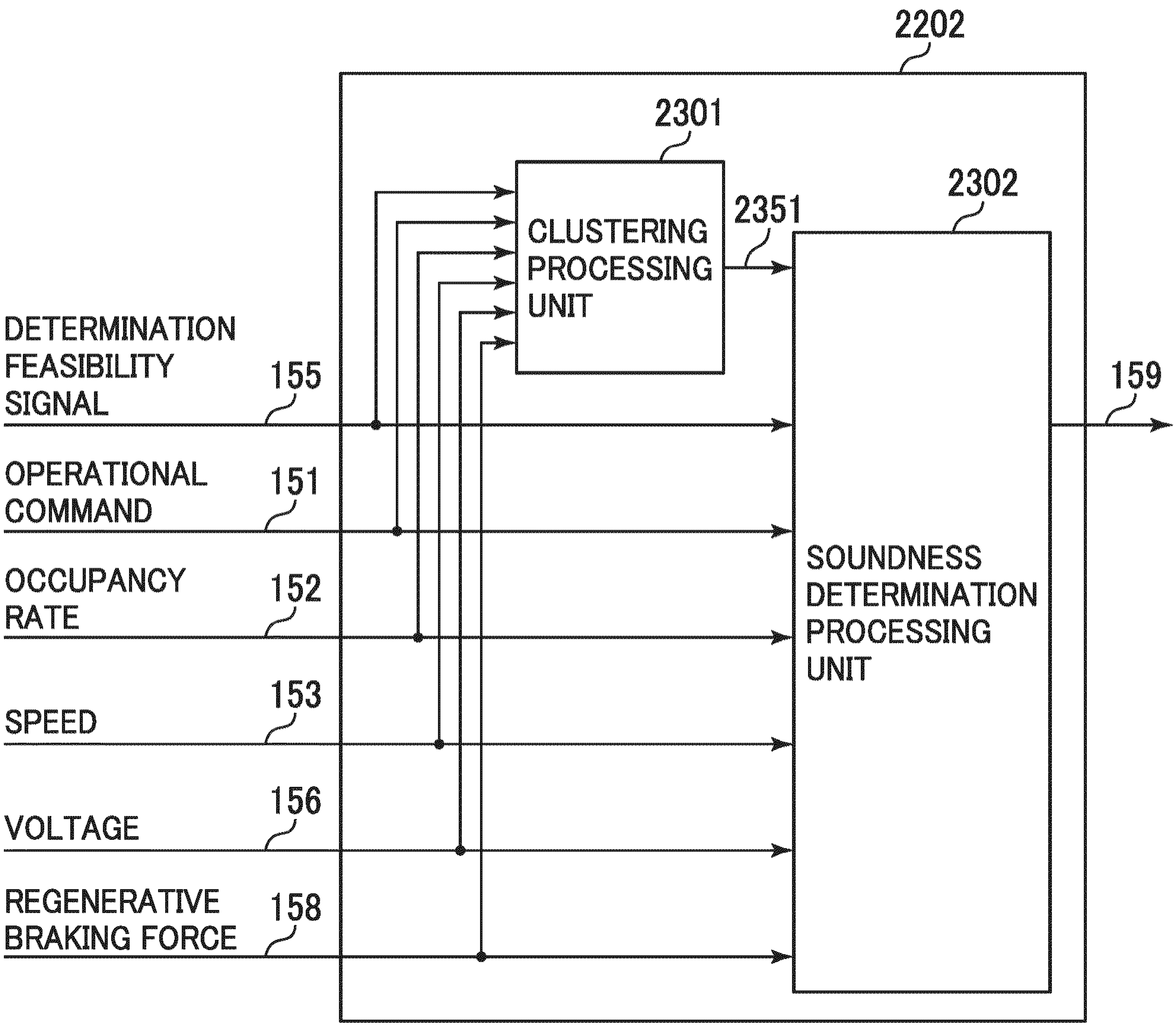
2202
2301
CLUSTERING PROCESSING UNIT
2351
2302
SOUNDNESS DETERMINATION PROCESSING UNIT
DETERMINATION FEASIBILITY SIGNAL
155
OPERATIONAL COMMAND
151
OCCUPANCY RATE
152
SPEED
153
VOLTAGE
156
REGENERATIVE BRAKING FORCE
158
159

FIG. 24

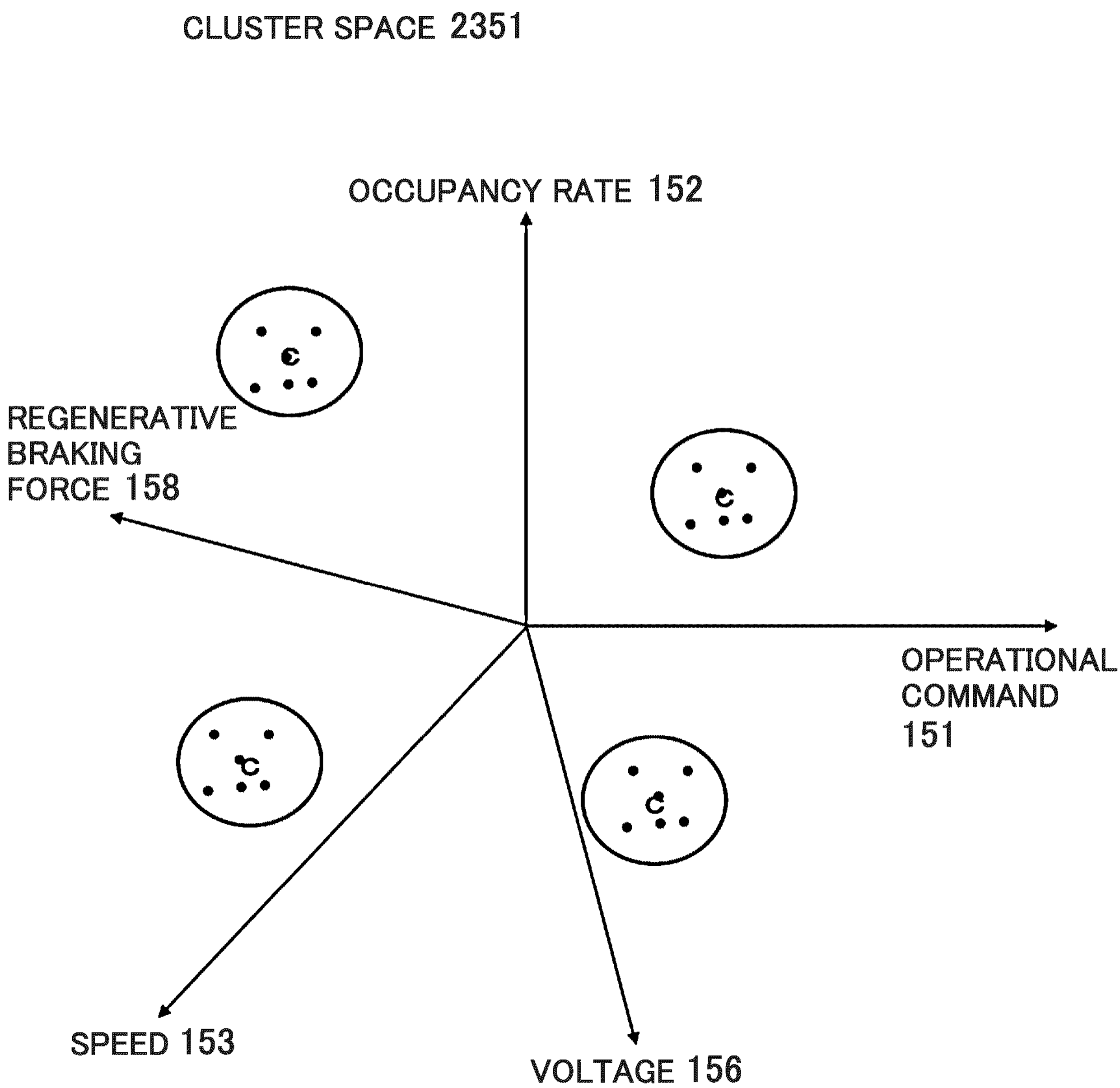
CLUSTER SPACE 2351
OCCUPANCY RATE 152
REGENERATIVE BRAKING FORCE 158
OPERATIONAL COMMAND 151
SPEED 153
VOLTAGE 156
C
C
C
C

FIG. 25

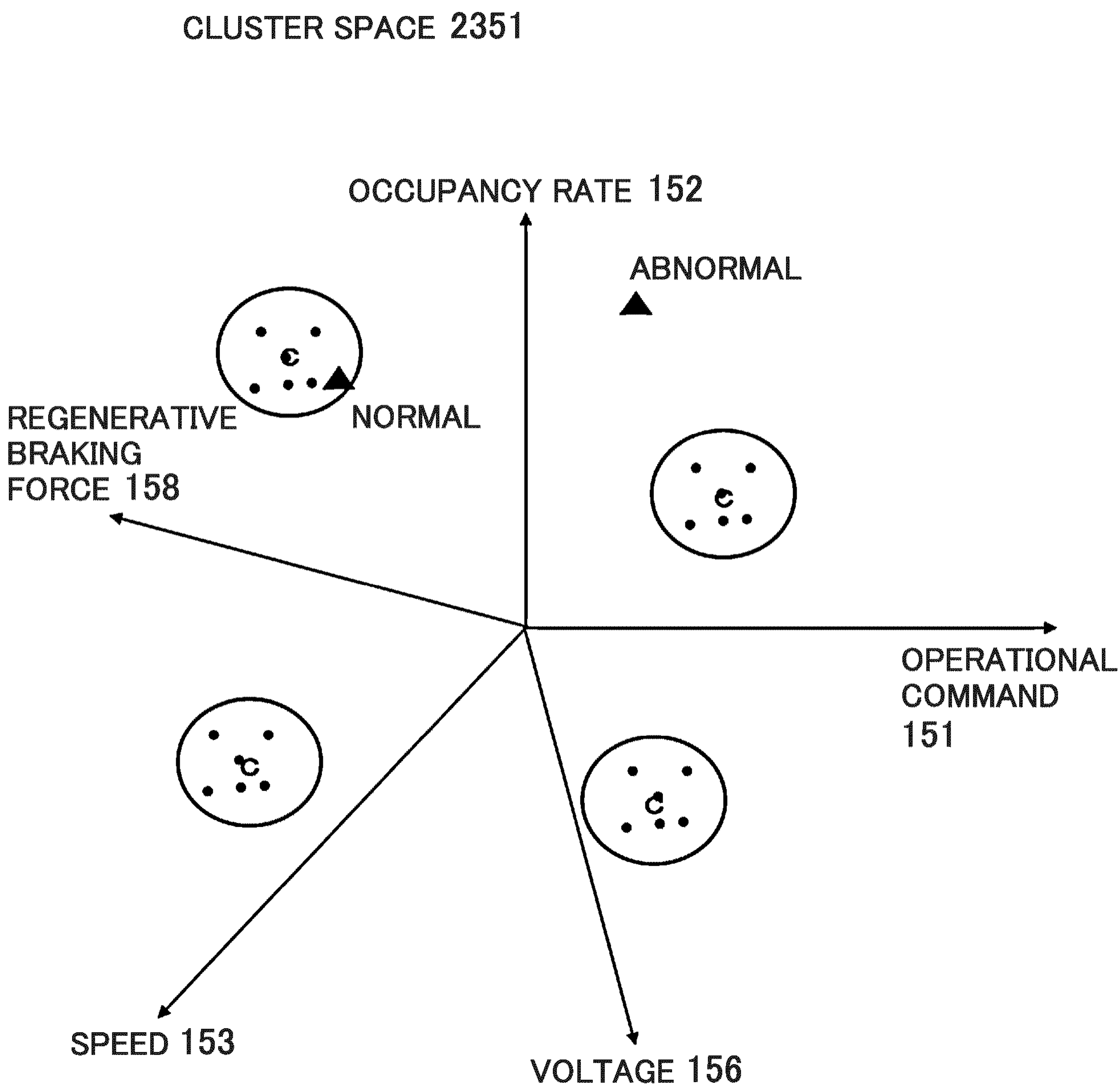
CLUSTER SPACE 2351
OCCUPANCY RATE 152
ABNORMAL
NORMAL
REGENERATIVE BRAKING FORCE 158
OPERATIONAL COMMAND 151
SPEED 153
VOLTAGE 156
c

**INTERNATIONAL SEARCH REPORT**

International application No.
**PCT/JP2023/037084**

**A. CLASSIFICATION OF SUBJECT MATTER**

***B60L 3/00***(2019.01)i; ***B60L 7/12***(2006.01)i; ***G01M 17/08***(2006.01)i
FI: B60L3/00 N; B60L7/12 A; G01M17/08

According to International Patent Classification (IPC) or to both national classification and IPC

**B. FIELDS SEARCHED**

Minimum documentation searched (classification system followed by classification symbols)

B60L3/00; B60L7/12; G01M17/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br><br>A | JP 2017-147786 A (KABUSHIKI KAISHA TOSHIBA) 24 August 2017 (2017-08-24)<br>paragraphs [0013]-[0069], fig. 1, 3-5 | 1-2, 4, 10, 12-13<br><br>3, 5-9, 11, 14-15 |
| Y | JP 2021-75162 A (HITACHI, LTD.) 20 May 2021 (2021-05-20)<br>paragraphs [0021]-[0025], fig. 1-4 | 1-2, 4, 10, 12-13 |
| Y | JP 11-299012 A (MITSUBISHI ELECTRIC CORPORATION) 29 October 1999 (1999-10-29)<br>paragraphs [0019], [0025]-[0027] | 1-2, 4, 10, 12-13 |
| Y | JP 2020-88959 A (KABUSHIKI KAISHA TOSHIBA) 04 June 2020 (2020-06-04)<br>paragraph [0032] | 10 |
| Y | JP 2020-8347 A (RAILWAY TECHNICAL RESEARCH INSTITUTE) 16 January 2020 (2020-01-16)<br>paragraphs [0005], [0072] | 10 |
| A | JP 2020-82993 A (EAST JAPAN RAILWAY CO.) 04 June 2020 (2020-06-04)<br>paragraph [0025] | 9 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 December 2023** | **09 January 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/037084**

| Patent document cited in search report | Publication date (day/month/year) | Patent family member(s) | Publication date (day/month/year) |
|---|---|---|---|
| JP 2017-147786 A | 24 August 2017 | US 2017/0232982 A1 paragraphs [0017]-[0071], fig. 1, 3-5 | |
| JP 2021-75162 A | 20 May 2021 | (Family: none) | |
| JP 11-299012 A | 29 October 1999 | (Family: none) | |
| JP 2020-88959 A | 04 June 2020 | (Family: none) | |
| JP 2020-8347 A | 16 January 2020 | (Family: none) | |
| JP 2020-82993 A | 04 June 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017147786 A